# EUROPÄISCHE PATENTSCHRIFT

(11) **EP 1 673 834 B1**
(45) Veröffentlichungstag und Bekanntmachung des Hinweises auf die Patenterteilung: **22.12.2010**
(21) Anmeldenummer: 04765792.9
(22) Anmeldetag: 04.10.2004
(51) Int. Cl.: H01M 10/04, H01M 2/36, H01M 6/40

(54) **BATTERIE, INSBESONDERE MIKROBATTERIE, UND DEREN HERSTELLUNG MIT HILFE VON WAFER-LEVEL-TECHNOLOGIE**
BATTERY, ESPECIALLY A MICROBATTERY, AND THE PRODUCTION THEREOF USING WAFER-LEVEL TECHNOLOGY
BATTERIE, EN PARTICULIER MICROBATTERIE, ET SA FABRICATION A L'AIDE DE LA TECHNOLOGIE DES TRANCHES

(30) Priorität: 06.10.2003 DE 10346310
(43) Veröffentlichungstag der Anmeldung: 28.06.2006
(73) Patentinhaber: Fraunhofer-Gesellschaft zur Förderung der angewandten Forschung e.V., 80686 München (DE)
(72) Erfinder: HAHN, Robert, 13355 Berlin (DE)
(74) Vertreter: Olgemöller, Luitgard Maria
(86) Internationale Anmeldenummer: PCT/EP2004/011058
(87) Internationale Veröffentlichungsnummer: WO 2005/036689

(56) Entgegenhaltungen:
- WO-A-01/73864
- US-A1- 2002 071 989
- US-A1- 2003 160 589
- PATENT ABSTRACTS OF JAPAN Bd. 013, Nr. 348 (E-799), 4. August 1989 (1989-08-04) -& JP 01 107448 A (MATSUSHITA ELECTRIC IND CO LTD), 25. April 1989 (1989-04-25)

## Beschreibung

Die vorliegende Erfindung betrifft Mikrobatterien, d.h. Batterien mit so geringen Abmessungen, dass sie z.B. auf Leiterplatten und elektronischen Schaltelementen Platz finden können, sowie Verfahren zu ihrer Herstellung. Die Batterien sind aus gängigem Folienmaterial für Kathode, Separator/Elektrolyt und Anode aufgebaut und mit Hilfe von Schritten kontaktiert und verkapselt, die der Wafer-Level-Packaging-Technologie entstammen.

Mikroelektronische Systeme werden immer kleiner. Um die Miniaturisierung voranzutreiben und Kosten zu senken, werden vollständige elektronische Systeme auf einem Chip hergestellt oder solche Chips dreidimensional übereinander gestapelt. Neue Anwendungen und Funktionen (Elektronische Körner: eGrain, smart dust und dergleichen) sind möglich, wenn diese Chips über eine eigene Energieversorgung verfügen. Zunehmend werden auch MEMS, das heißt elektronische Mikrosysteme mit mikromechansichen Komponenten, Sensoren, Aktoren als autonome Komplettsysteme entwickelt, die demzufolge eine in den Abmessungen und Parametern angepasste Batterie benötigen.

Kleine Batterien in den gemäß der vorliegenden Erfindung vorzugsweise herstellbaren Abmessungen (von unter 10mm, vorzugsweise unter 3mm Durchmesser bzw. Länge/Breite und in einer Dicke zwischen ca. 0.5 und 10 mm oder in jeder Dimension) und Kapazitäten zwischen vorzugsweise ca. 1 und 100 mAh werden bisher nur als Knopfzellen hergestellt. Eine weitere Miniaturisierung ist mit dieser Technologie jedoch nicht möglich. Auch die volumenbezogene Energiedichte ist bei Abmessungen von wenigen Millimetern klein, da das Metallgehäuse und die Dichtung viel Platz einnimmt. Die wirtschaftliche Integration in Mikrosysteme ist nicht gegeben. Eine direkte Verbindung zwischen Knopfzelle und Halbleiterchip ist nicht möglich. Das runde Blechgehäuse besitzt auf jeder Seite einen Kontakt und kann somit nicht einfach mit einem IC verbunden werden.

Li-Polymerbatterlen werden in der Regel durch Polymer-Aluminium- Verbundfolien verpackt. Das Polymermaterial muss ein thermoplastischer Werkstoff sein, damit er sich bei niedrigen Temperaturen verschweißen lässt. Die Siegelnaht muss dabei eine Breite von einigen Millimetern haben um den Dichtheits- und Zuverlässigkeitsanforderungen zu genügen. Bei sehr dünnen Batterien wirkt sich die Dicke dieser Verkapselung negativ auf die Gesamtenergiedichte aus. Jede Batterieform benötigt eigene Werkzeuge zur Versiegelung, so dass neue Formen die Anschaffung neuer Werkzeuge erfordern, wodurch die Kosten bei kleineren Stückzahlen stark steigen. Die JP 2001266952 beschreibt ein Verfahren zum Laminieren des Randbereichs von Li-Polymerbatterien. Aus der DE 010147562 A1 ist eine Vorrichtung zum Versiegeln von Flachbatterien bekannt. Die US2003/0031926 A1 betrifft das Anordnen von Durchführungen in Polymer-Packages für Li-Flachbatterien.

Es ist eine Vielzahl von Lösungen vorgeschlagen worden, Batterien auf Substraten durch Dünnfilmprozesse abzuscheiden. Es werden PVD, CVD und reaktive PVD-Verfahren sowie Maskentechnologien eingesetzt. Hierbei müssen sehr aufwendige Neuentwicklungen durchgeführt werden, und die kontinuierliche Steigerung der Energiedichte in der konventionellen Batteriefertigung kann nicht genutzt werden. Die vakuumtechnische Herstellung der Batterieschichten, insbesondere des Elektrolyten dauert sehr lange und ist deshalb teuer. Dünnfilmbatterien übersteigen die Energiedichte heutiger Polymerbatterien. Die Gesamtenergie ist aber klein, da nur sehr dünne Batterien (mit Abmessungen von einigen Mikrometern) zyklenstabil sind. Für höhere Speicherkapazitäten müssen viele derartige Batterien übereinandergestapelt werden, was die Kosten wiederum stark erhöht. Aus der US6,558,836 ist eine Struktur von Dünnfilmbatterien bekannt. Die US2002/0071989 offenbart das Verkapseln von Dünnfilmbatterien. Die US 6,197,450 betrifft das Einbetten von Dünnfilmbatterien in Substrate. Die US 2002/0110733 und die US 2002/0092558 beschreiben mehrlagige Dünnfilmbatterien. Gemäß der Lehre der WO 01/73866 werden Dünnfilmbatterien mit ionengestützten Prozessen abgeschieden. Dieses Verfahren benötigt keine Temperschritte und eignet sich deshalb auch zur Integration auf nicht temperaturstabilen Substraten, z.B. Polymerfolien.

Es ist auch vorgeschlagen worden, Mikrobatterien mit Hilfe von Drucktechniken herzustellen, zum Beispiel mit Tintenstrahldrucken, siehe WO 01/80338.

Aus US 2003/0160589 A1 ist eine wiederaufladbare Batterie offenbart, die einen Anodenstromsammler in direktem Kontakt zu einer Elektrolytschicht aufweist, der permeabel für Lithiumionen ist. Beim Aufladen der Batterie wandert ein Lithiumionenstrom von der Kathode durch den Elektrolyten und scheidet sich nach Durchtritt durch den Anodenstromsammler in Form einer Anode aus elementaren Lithium auf dessen Außenseite ab. Die Batterie ist in ein Gehäuse aus einer Metallfolie, einer metallisierten Kunststofffolie oder aus einem dünnen keramischen Material eingeschlossen, das ausreichend Platz für die Lithium-Abscheidung bietet. Die ältere, in diesem Dokument genannte US 6,168,884 B1 verwendet stattdessen eine Abdeckschicht, die eine Federkraft auf die sich bildende Anode ausübt. Diese kann aus Lithiumphosphoroxynitrid gebildet sein. Der Anodenstromsammler fungiert hier gleichzeitig als Kontaktfahne, die zwischen dem Substrat und der Abdeckschicht aus der Batterie herausragt.

In der Patentliteratur sind mehrere Beschreibungen vorhanden, wie die Batterieintegration mit dem Halbleiter für eine effektive Kontaktierung und Anschluss an das integrierte Batteriemanagement genutzt werden können. So betrifft die JP 2002/291176 die Anschlussbelegung der Batterie im IC-Gehäuse, und die US 6,432,577 offenbart eine Mikrobatterie, die komplett zwischen zwei Si-Chips integriert ist. Die aktiven Massen befinden sich dabei in wabenförmigen Si-Strukturen. Die Abdichtung erfolgt durch einen Wafer-Bond oder durch einen Epoxy-Dichtring.

Aufgabe der Erfindung ist es, Batterien auch mit sehr kleinen Abmessungen bereitzustellen, die eine den Dichtigkeitsanforderungen von Lithiumbatterien genügende Abdichtung/Verkapselung aufweisen, wobei die Abdichtung bzw. Verkapselung aber derart wenig zum Gesamtgewicht bzw. der Gesamtdicke der Batterien beitragen soll, dass die erzielbare Gesamtenergiedichte bzw. Kapazität pro Volumen bzw. Gewicht der Gesamtbatteriekörper im wesentlichen nicht oder nur kaum davon beeinflusst wird. Der Einsatz von Werkzeugen, die in Abhängigkeit von der Größe der herzustellenden Batterien neu konstruiert bzw. ausgetauscht werden müssen, um die Verkapselung herzustellen, soll vermieden werden. Die Verkapselung soll so ausgestaltet werden können, dass die Batterien bei Bedarf unmittelbar auf einem elektrischen Bauelement angeordnet werden können oder in dieses integriert sind. Sie soll sich aber auch für übliche Folienbatterien eignen, insbesondere in Lithium-Technologie. In einer spezifischen Ausgestaltung sollen die erfindungsgemäßen Batterien für Chipkarten geeignet sein, wofür ihre Gesamtdicke unter 0,6 mm liegen muß.

Die Aufgabe der Erfindung wird durch die Bereitstellung einer Batterie gemäß Anspruch 1 gelöst, die sich in Form von in der Regel flexiblen, einzelnen oder bereits zusammenlaminierten, selbsttragenden oder von einem Hilfsträger abgezogenen Schichten oder Folien mit einer Einzelschichtdicke von ≥10µm für die Elektrodenschicht und ansonsten von vorzugsweise 10µm oder darüber in entsprechender Reihenfolge auf einem elektrisch nicht leitenden Substrat befinden, wobei die Elektroden mit geeignet ausgebildeten Stromableiterschichten in Kontakt stehen. Die Batterie weist eine erste

Abdeckschicht aus einem ersten, gegenüber dem verwendeten Elektrolyt- und Elektrodenmaterial beständigen, elektrisch isolierenden Material, das aus der Gasphase oder in Form einer Flüssigkeit oder viskosen Paste aufgebracht wurde, und vorzugsweise eine zweite Abdeckschicht aus entweder einem Material wie voranstehend beschrieben oder einem zweiten, elektrisch leitfähigen Material, z.B. einem Metall oder einer Legierung auf, das ebenfalls aus der Gasphase oder in Form einer Flüssigkeit oder viskosen Paste aufgebracht wurde, die zusammen mit dem Substrat und, sofern vorhanden, (einer) weiteren Komponente(n), eine Verkapselung bildet/bilden, durch die die Batterie gegenüber der Außenwelt abgedichtet bzw. isoliert ist. In einer bevorzugten Ausgestaltung sind die Batterie-Elemente zwischen dem elektrisch nicht leitenden Substrat sowie einem zweiten Substrat angeordnet, und die offenen Randbereiche zwischen diesen Substraten sind durch die eine oder die beiden oben genannten Abdeckschicht(en) verschlossen. Die Abdeckschicht(en) besitzen Ausnehmungen oder Öffnungen, über die die Stromableiter der Batterie mit den äußeren Batteriekontakten in Verbindung stehen. Diese Ausnehmungen oder Öffnungen sind mit einem elektrisch leitenden Material, vorzugsweise mit Metall, gefüllt und damit vollständig abgedichtet.

Die einzelnen Elektroden- bzw. Separator-/Elektrolytschichten oder Folien bestehen aus dem elektrochemisch aktiven bzw. aktivierbaren Material sowie ggf. einer Polymermatrix (z.B. häufig bei üblichen Folienschichten und/oder bei mit Drucktechniken vorstrukturierten Schichten) und/oder weiteren Hilfsstoffen. Unter dem Ausdruck "elektrochemisch aktives bzw. aktivierbares Material" sollen Materialien verstanden werden, die als aktive Batteriekomponenten eingesetzt werden, also vor allem elektronenleitende Materialien für die Elektroden und ionenleitende Materialien für Elektrolytschichten. Die "aktiven" bzw. "aktivierbaren" Materialien der Separatorschichten müssen nicht zwingend leitfähig sein; diese Schichten umfassen oder bestehen aus Materialien, die den Durchtritt ionenleitender Flüssigkeiten bzw. der Ionen darin ermöglichen. Auch diese Materialien sollen erfindungsgemäß unter den Ausdruck "aktive" bzw. "aktivierbare" Materialien fallen. Durch Ankontaktierung der Batterie wird das elektrochemisch aktivierbare Material dann aktiviert.

Für das Aufbringen der Abdeckschicht(en) bieten sich die Methoden des sog. Wafer-Level-Packaging an. Unter diesem Ausdruck ist die Anwendung von Verfahrensschritten zu verstehen, wie sie vor allem bei der Herstellung und Strukturierung von Kontakt- und Verkapselungsschichten auf Halbleiterchips im Wafer-Verband, d.h. als scheibenförmiges Substrat gängig sind. Insbesondere sind hierunter Techniken zu verstehen, die das Aufbringen dünner und sehr dünner Schichten aus flüssiger Phase oder Gasphase umfassen, wie Beschichtungsverfahren (z.B. Aufschleudern, Tauch- oder Sprühbeschichtung von mehr oder weniger viskosen Flüssigkeiten) sowie Plasma-, Vakuum- und ionengestützte Abscheideverfahren. Die aufgebrachte(n) Abdeckschicht(en) wird/werden, soweit nötig, anschließend durch Strukturierungsschritte an den Stellen mit Öffnungen versehen, an denen sich die Stromableiterkontakte der Batterie befinden. Die Öffnungen werden durch Einbringen von Metall oder anderem elektrisch leitendem Material wieder verschlossen, das den Stromfluss zwischen den Stromableitern und äußeren Batteriekontakten ermöglicht. Dieses Material kann ggf. auch in Form einer (strukturierten) Beschichtung größere Bereiche der Abdeckschichten bedecken und dabei z.B. als Kontakt auch zu weiteren Komponenten oder zur Verbindung der gleichgerichteten Pole einer Mehr- oder sogar Vielzahl von parallel oder seriell geschalteten Batterien auf demselben Substrat eingesetzt werden.

Durch die Kombination des Einsatzes der in den letzten Jahren weit entwickelten, hochautomatisierbaren, materialsparenden und extrem effizienten Folientechnologie der Batteriefertigung mit den Prozessen des Wafer-Level-Packaging für das Versiegeln der Batterien, die schneller sind als die konventionelle Siegeltechnologie und formunabhängig in universell einsetzbaren Vorrichtungen ablaufen, gelingt es, schnell und unaufwendig ein miniaturisiertes und formflexibles Package mit optimierter Leistungsdichte herzustellen. Insbesondere bei der Verwendung von Plasma-, Vakuum- und ionengestützten Verfahren können viele Materialien mit sehr guten Barriereeigenschaften und sehr hoher mechanischer Stabilität und Haftung eingesetzt werden.

Mit der vorliegenden Erfindung ist es durch die Verbindung des Einsatzes etablierter Batterietechnologien mit einer integrierten Gehäusetechnologie insbesondere auch möglich, Chip-große Mikrosysteme von wenigen mm³ bereitzustellen. Das bereits vorhandene Substrat der elektronischen Schaltung bzw. der Halbleiterchip dient dabei gleichzeitig als Unterseite des Gehäuses, die Oberseite des Gehäuses der Batterie wird durch eine nur wenige µm dicke Beschichtung (Verkapselung) oder auch beispielsweise durch ein weiteres Substrat für einen gestapelten Aufbau von mehreren Batterien oder einer Batterie in Kombination mit einem oder mehreren anderen Elementen übereinander realisiert. Die Substrate können z.B. Si-Chips in Form aktiver Halbleiterschaltungen, partiell elektrisch leitfähige Substrate oder Substrate mit Solarzellen sein. Beim Vorhandensein von zwei Substraten dienen diese gleichzeitig der Verkapselung von Ober- und Unterseite der Batterie und werden durch eine ein- oder mehrschichtige Verkapselung der Randbereiche wie oben beschrieben zwischen den Substraten geschlossen. Solche Batterien können beispielsweise zur Energieversorgung eines Halbleiter-Schaltkreises dienen. Eine Kombination aus Solarzelle, Batterie und Halbleiterchip ergibt ein autonomes Mikrosystem. Die elektrische Verbindung zwischen den äußeren Chips und der Batterie erfolgt z.B. durch eine senkrecht zum Stapelaufbau verlaufende, äußere Kontaktierungsstruktur. Es können bei dieser Ausgestaltung auch Stacks oder andere Anordnungen von übereinander gestapelten Batterien verwendet werden, wobei die Abdeckung einer Batterie als isolierendes Substrat für die nächste dient.

Eine derartige Miniaturisierung ist bisher nur bei Dünnfilmbatterien möglich gewesen, die durch vakuumtechnische Abscheideverfahren hergestellt werden. Diese Technologie ist aber bedingt durch komplizierte Prozesse und Anlagentechnik sehr teuer und liefert, da die Schichtdicke der Elektroden auf ca. 1 µm begrenzt ist, nur geringe Kapazitäten. Deren Schichtdicken in den erfindungsgemäßen Batterien liegen dagegen bei mindestens 10 µm und sind in weiten Bereichen realisierbar, da die einzelnen Batteriefolien in variablen Dicken erzeugt werden können. Vorzugsweise sind die einzelnen Schichten bis ca. 50 µm dick, ggf. auch noch dicker. Dagegen kann die Abdeckung in jedem Falle extrem dünn gehalten werden, so dass die erzielbaren Kapazitäten pro Volumeneinheit der Gesamtbatterie sehr niedrig sind.

Nachstehend soll die Erfindung anhand von Figuren und Ausführungsbeispielen näher erläutert werden, worin die Fig. 1 bis Fig. 8 die Herstellung von verkapselten Batterien in einer ersten erfindungsgemäßen Ausgestaltung darstellen, wobei
- Fig. 1: ein Substrat mit hermetischen Durchkontakierungen und mit einer darauf aufgebrachten Metallisierung von oben (Fig. 1a) und von der Seite (Fig. 1 b) zeigt, die als äußerer Kontakt für die einzige oder unterste Elektrode und damit ggf. gleichzeitig als Stromableiter für die erste Elektrode (wenn diese keinen zusätzlichen eigenen Stromableiter aufweist) und außerdem als Kontaktstelle für die Weiterleitung von Strom aus der zweiten Elektrode dienen soll,
- Fig. 1c: zeigt, wie mehrere solcher Metallisierungen zur Herstellung einer Mehrzahl derartiger Batterien auf einem Substrat angeordnet werden können,
- Fig. 2a und 2b: dasselbe Substrat wie Fig. 1a, 1b mit der Metallisierung sowie einer ersten Elektrode zeigen,
- Fig. 3a und 3b: das mit den Komponenten gemäß Fig. 2a und 2b sowie einer Separator-Elektrolytschicht versehene Substrat zeigen,
- Fig. 3c: ein Substrat mit den gleichen Komponenten wie in Fig. 3a gezeigt veranschaulicht, wobei jedoch die Kontaktstelle für die Weiterleitung von Strom aus der zweiten Elektrode nicht die in Fig. 1 gezeigte Gestalt besitzt, sondern die Form eines Rahmens hat, der als Rundum-Kontakt für eine flächendeckende Metallisierung dienen kann,
- Fig. 4a und 4b: das mit den Komponenten gemäß Fig. 3a und 3b sowie einer Gegenelektrode versehene Substrat zeigen,
- Fig. 5a und 5b: das mit den Komponenten gemäß Fig. 5a, 5b sowie einer als oberer Stromableiter fungierenden Metallfolie versehene Substrat zeigen,
- Fig. 6a und 6b: das mit den Batteriekomponenten versehene Substrat gemäß Fig. 5a 5b zeigen, das mit einer Verkapselungsschicht abgedeckt ist,
- Fig. 7a: den in Fig. 6a, 6b dargestellten Aufbau zeigt, dessen Verkapselungsschicht so strukturiert wurde, dass eine Kontaktierungsstelle des oberen Stromableiters freigelegt ist,
- Fig. 7b: ein mit mehreren Batteriestrukturen gemäß Fig. 6a, 6b versehenes Substrat zeigt, bei dem die Verkapselungsschichten mehrerer Batteriestrukturen gleichzeitig geöffnet wurden,
- Fig. 8a: den in Fig. 7a dargestellten Aufbau zeigt, dessen Stromableiter- Kontaktierungsstelle mit einer Metallschicht belegt ist, die einen Kontakt zur mit der zweiten Durchkontaktierung verbundenen Kontaktstelle herstellt,
- Fig. 8b: den in Fig. 7b dargestellten Aufbaus zeigt, bei dem die offenen Stromableiterkontakte aller vier Batteriestrukturen mit einer Metallschicht belegt sind,
- Fig. 8c: eine Variante zu Fig. 8a zeigt, bei der die Metallschicht nicht nur im Bereich der Kontaktierungsstelle vorhanden ist, sondern die ganze Batterie vollständig abdeckt, und die
- Fig. 9a und 9b: die Herstellung von verkapselten Batterien in einer zweiten erfindungsgemäßen Ausgestaltung darstellen, wobei

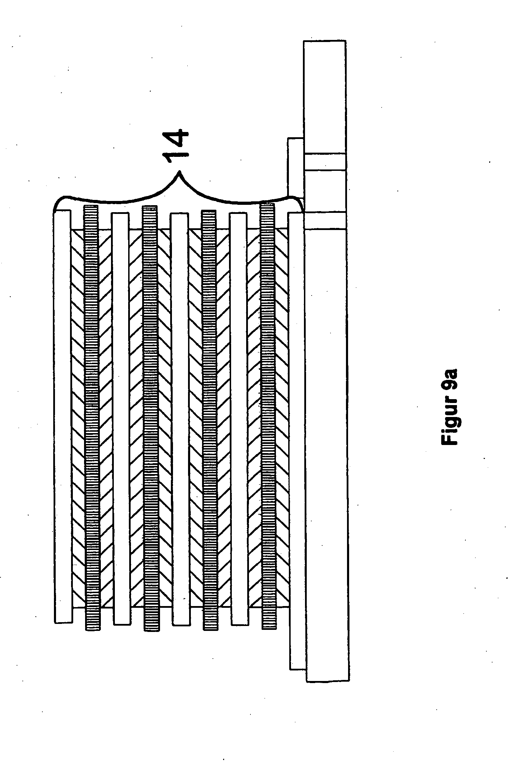

- Fig. 9a: einen vorgefertigten, kompletten Batterie-Folienstapel auf einem Substrat zeigt und

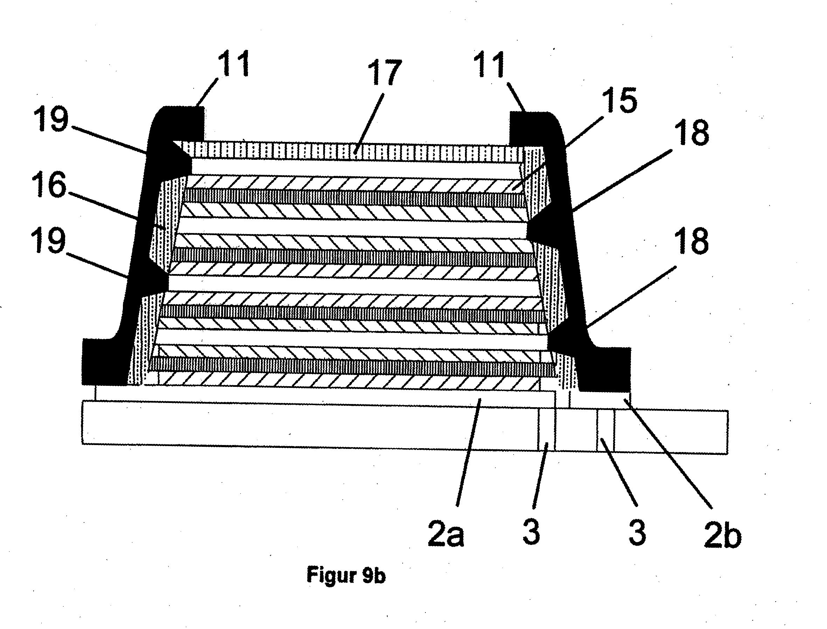

- Fig. 9b: die fertig verkapselte Batterie darstellt.

Weiterhin stellen die Figuren dar:

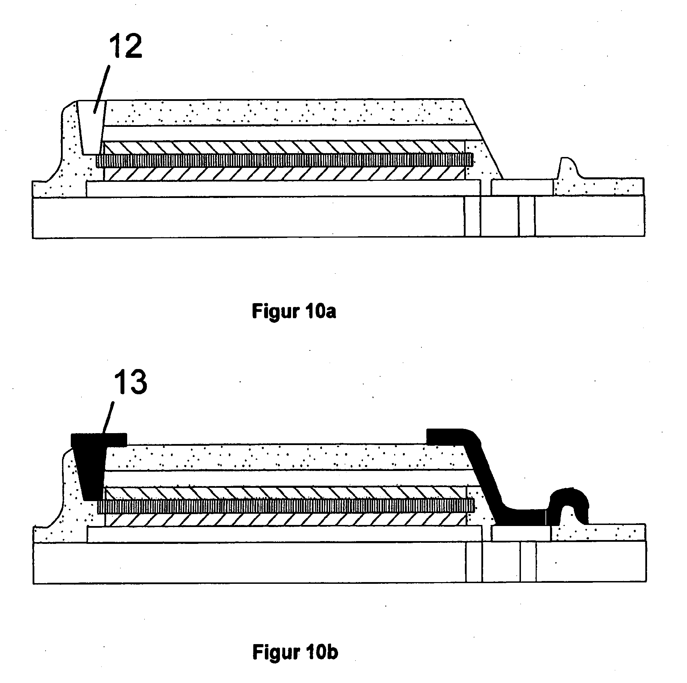

- Fig. 10a und 10b: die Herstellung einer Öffnung zur Separatorfolie/Elektrolytfolie in der Verkapselung zum nachträglichen Einfüllen von Elektrolytlösung,

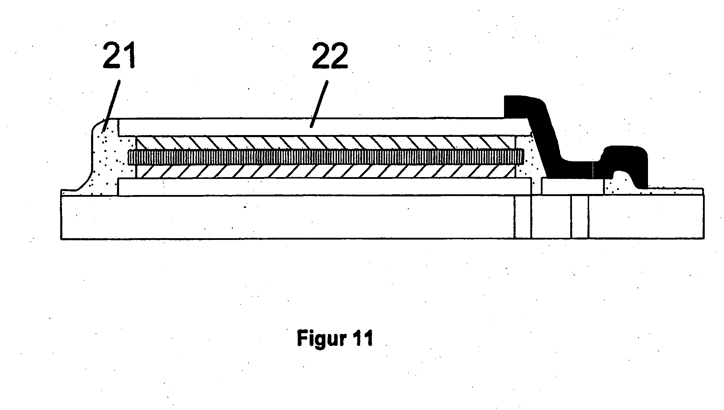

- Fig. 11: eine Ausgestaltung der erfindungsgemäßen verkapselten Batterie, bei der der obere Stromableiter ein durchgehendes Metallblech ist, das gleichzeitig als Schutzabdeckung dient,

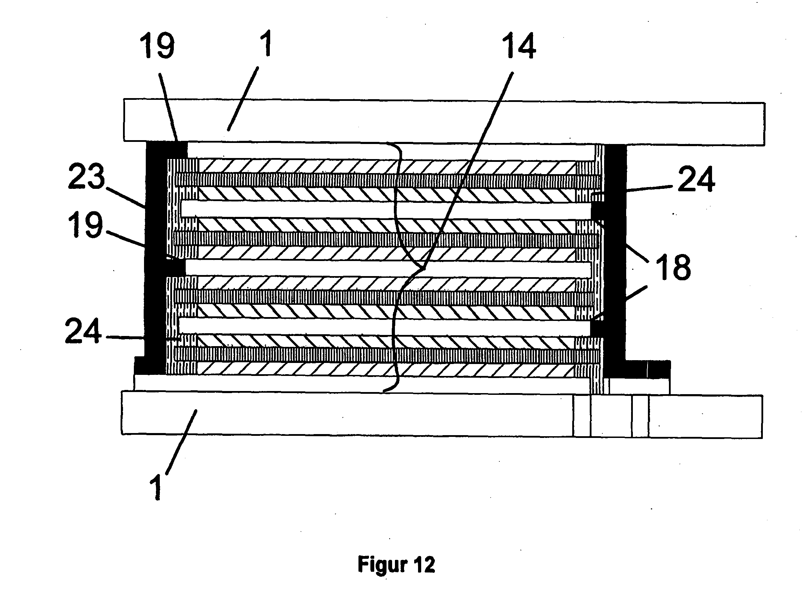

- Fig. 12: eine zwischen zwei nichtleitenden Substraten angeordnete Batterie gemäß der vorliegenden Erfindung ist, und

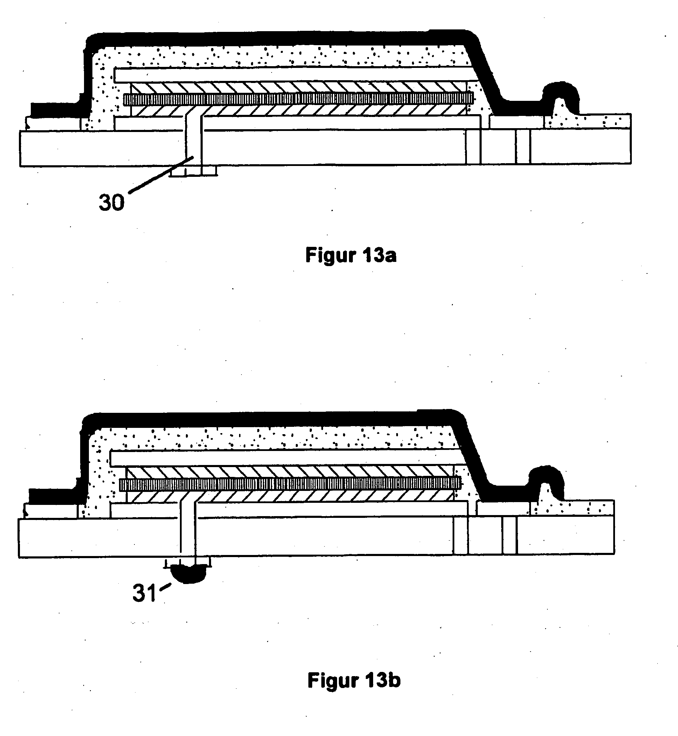

- Fig. 13a und 13b: einen gegenüber Fig. 10 alternativen Vorschlag zum Einbringen von Elektrolytlösung über die Rückseite der Batterie.

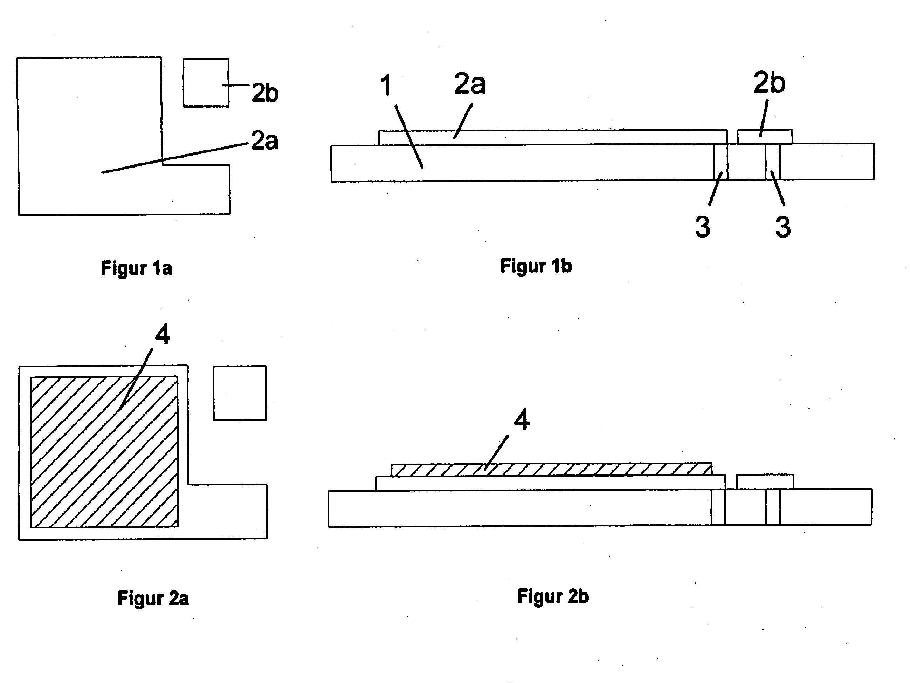

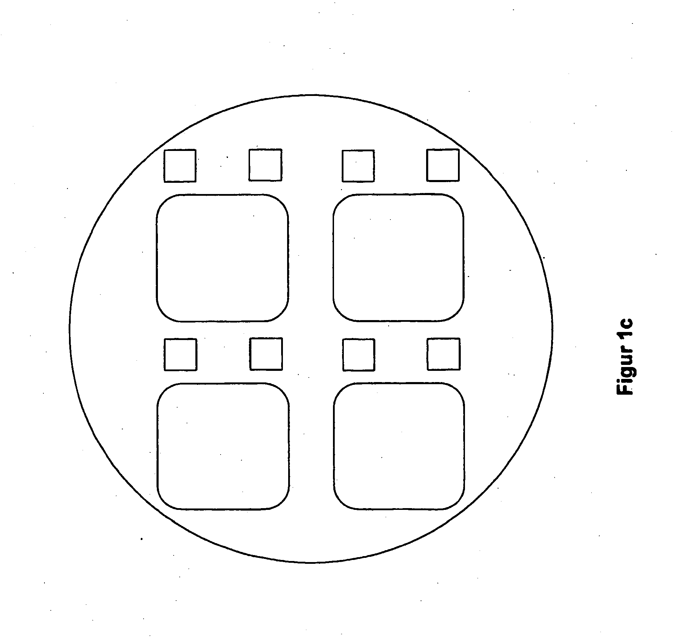

Ausgangspunkt für die Erzeugung der erfindungsgemäßen, verkapselten Batterien ist in einer ersten Ausgestaltung der Erfindung eine nach den üblichen Methoden hergestellte Folienbatterie mit einem oder zwei äußeren Stromableitern, den aktiven Massen von Anode und Kathode und dem Elektrolyt, beispiels- und vorzugsweise eine Li-Polymerbatterie hoher Energiedichte, die großflächig von Rolle zu Rolle hergestellt werden kann. In einer zweiten Ausgestaltung geht man von den einzelnen Elektroden und Elektrolytschichten oder -folien sowie Stromableitern aus, die auf Trägerschichten gehalten oder als freitragende Schichten verwendet werden. Letztere Variante wird nachstehend unter Bezugnahme auf die Figuren 1 bis 8 zuerst beschrieben, und zwar für Batterien, die auf einem Substrat angeordnet und auf ihrer Oberseite sowie seitlich mit einer sehr dünnen Verkapselung versehen werden:

In einem isolierenden Substrat 1, welches z.B. ein Si-Wafer, die Systemträgerfolie einer Chipkarte oder ein flexibles und relativ dünnes Polymersubstrat (vorzugsweise mit einer Dicke von ca. 20 bis 100 µm) sein kann, werden Batteriekontakte 2a, 2b für beide Pole in Form einer Metallisierung hergestellt, siehe Fig. 1. Die Kontakte zur Weiterleitung können in beliebiger Form nach Bedarf gestaltet sein. Das Substrat besitzt in der dargestellten Ausgestaltung hermetisch dichte Durchkontaktierungen 3, um die Batteriekontakte auf die andere Seite zu überführen. Alternativ können dies z.B. Kontakte sein, die durch eine Oberflächenisolation des Halbleiters führen, um an die darunter liegende Verdrahtung anzukontaktieren, oder die Kontakte können mit Leitbahnen oder Metallisierungen auf der Substratoberfläche seitlich weitergeführt bzw. zu einer anderen Komponente geleitet werden.

Die Metallisierung erfolgt mit Hilfe eines geeigneten Verfahrens, wie es dem Fachmann zur Verfügung steht. Beispiele sind Sputtern, Aufdampfen, galvanisch Verstärken. Alternativ kann auch eine dünne metallische Schicht auf dem Substrat aufgeklebt werden. Als Metall verwendet der Fachmann dasjenige, das er in konventionellen Batterien als den Ableiter in Form von Netzen oder Blechen einsetzten würde. Die Metallisierung erfolgt entweder als durchgehende Schicht, die anschließend strukturiert wird, oder durch eine direkt strukturierende Deponierung, z.B. Siebdruck oder eine Abscheidetechnik wie Sputtern, Bedampfen, unter Verwendung geeigneter Schablonen. Wie in Abb. 1c gezeigt wird, kann die Metallisierung so strukturiert werden, dass eine Vielzahl von Batterien und ihrer Anschlüsse gleichzeitig auf einem Substrat angeordnet werden kann, z.B. in einer rechteckigen bzw. symmetrischen Anordnung wie gezeigt. Das Strukturieren kann chemisch oder physikalisch erfolgen, z.B. durch Naß- oder Trockenätzen, z.B. reaktivem Ionenätzen, oder mit Hilfe einer Semiadditivtechnik.

In Fig. 2 ist der nächste Schritt gezeigt, bei dem die erste Elektrode 4 auf die Batteriekontakte auflaminiert wird. In dieser Ausgestaltung kann der Batteriekontakt gleichzeitig die Funktion der untersten Stromableiterlage übernehmen; bei Bedarf oder wenn gewünscht (z.B., wenn bereits vorlaminierte, mit eigenen Stromableitern versehene Batterieelemente bzw. Elektroden eingesetzt werden) kann zwischen der Metallisierung und der ersten Elektrode aber auch noch ein zusätzlicher Stromableiter vorhanden sein bzw. aufgebracht werden. Die Elektrodenschicht (Anode oder Kathode) kann z.B. auf einem Hilfsträger bzw. auf einer Trägerfolie abgeschieden und bei Bedarf bereits vor dem Aufbringen in geigneter Weise strukturiert worden sein; sie kann aber auch selbsttragend sein. Die Elektrode ist aus dem hierfür geeigneten Elektrodenmaterial hergestellt, wie aus dem Stand der Technik bekannt. Das Elektrodenmaterial kann in Kombination mit einer organischen Matrix und/oder mit verschiedenen funktionalen Zusätzen, z.B. zur Erhöhung der Leitfähigkeit, oder, bei ausreichender Flexibilität des verwendeten anorganischen Materials, ohne Zusatz vorliegen. Die ggf. erfolgte Abscheidung auf einem Hilfsträger kann mit beliebigen Verfahren durchgeführt sein, z.B. durch Aufstreichen einer Paste oder mit drucktechnischen Verfahren. Die Schicht kann zuerst durchgehend gebildet und nachträglich wie erforderlich strukturiert werden, z.B. in eine Vielzahl von Rechtecken, wie z.B. für das Beispiel der Fig. 1 bis 8 benötigt. Die Strukturierung erfolgt z.B. durch subtraktiven Abtrag vom Hilfsträger, was sich mit Hilfe mechanischer Verfahren wie Kratzen, Wasserstrahlbearbeitung, Laserbearbeitung, chem. Ätzen oder dergleichen bewerkstelligen lässt. Alternativ können die Elektrodenschichten durch ein Druckverfahren wie Siebdruck gleich in der richtigen Form aufgebracht werden. Anschließend wird die Elektrode auflaminiert (oder, in selteneren Fällen, mit einem elektrisch leitenden Kleber aufgeklebt), und der Hilfsträger wird, soweit vorhanden, abgezogen. Sind mehrere Batterien in gleicher Höhe auf dem Substrat angeordnet, erfolgt dieser Schritt vorzugsweise gleichzeitig mit allen Batteriestrukturen. Unter dem Ausdruck "Auflaminieren" ist dabei vor allem eine Technik zu verstehen, bei der die Schichten oder Folien unter Druck und bei erhöhten Temperaturen auf die jeweilige Unterlage aufgebracht werden. Besonders dann, wenn sich organische thermoplastische Polymere in den Schichten befinden, kann dabei eine innige Verbindung mit den Nachbarschichten erfolgen

In einer alternativen Ausgestaltung werden die z.B. chipgroßen Elektroden ausgestanzt und (mit oder ohne Hilfsträger) mit einem Chipbonder direkt auf dem Substrat mit Stromableiter einzeln auflaminiert oder gebondet.

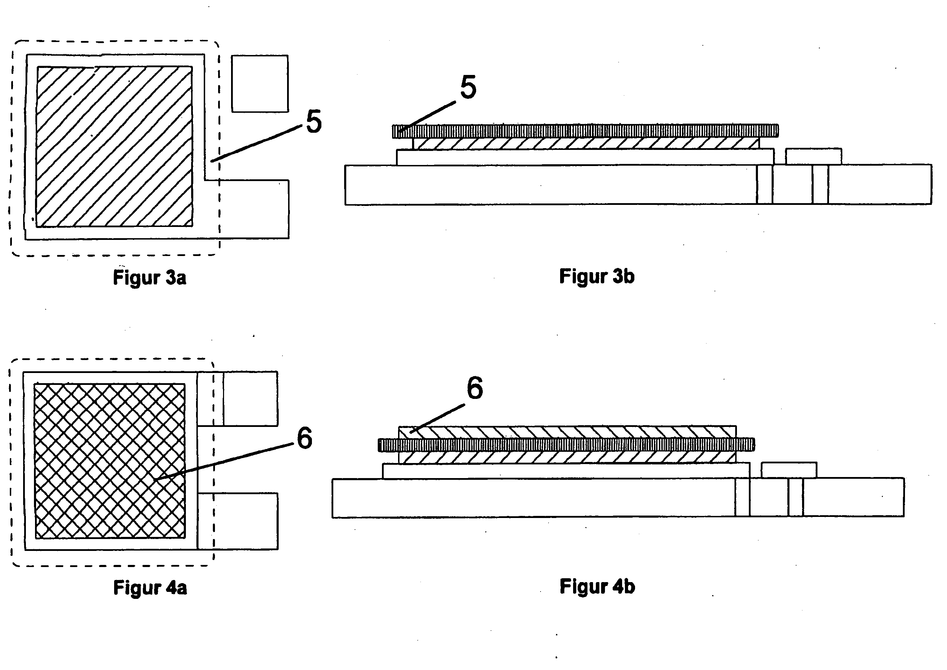

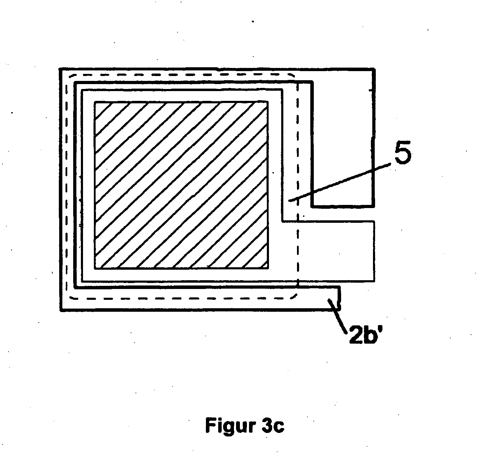

Fig. 3 zeigt das Aufbringen des Elektrolyten bzw. der Separator-Elektrolytschicht 5. Diese Schicht kann ein in Bezug auf Ionenleitung neutrales, saugfähiges Material sein, das zu einem späteren Zeitpunkt mit Elektrolytlösung befüllt wird, oder es kann sich um einen Festkörperelektrolyten handeln, der mit oder ohne zusätzliche ionenleitende Flüssigkeit als Elektrolytschicht fungiert, wie aus der Technik bekannt. Diese Schicht kann entweder freitragend sein und nach dem Aufbringen auf der Elektrodenschicht 4 strukturiert werden, oder es erfolgt auf dem Hilfsträger eine Vorstrukturierung. Die hierfür einsetzbaren Verfahren sind die gleichen, die für das Aufbringen (vor allem Laminieren, ggf. auch Kleben) und ggf. für das Strukturieren der ersten Elektrode genutzt werden können und voranstehend für diese beschrieben sind. Statt dessen können auch fotostrukturierbare Elektrolyte eingesetzt werden, die ganzflächig aufgebracht werden und anschließend durch Belichten und Entwickeln in Größe der einzelnen Batterien strukturiert werden.

Fig. 4 illustriert das Aufbringen der Gegenelektrode 6. Die Herstellung erfolgt mit den gleichen Verfahrensschritten wie die der ersten Elektrode. Die Elektrodenmaterialen werden vom Fachmann in geeigneter Weise gewählt.

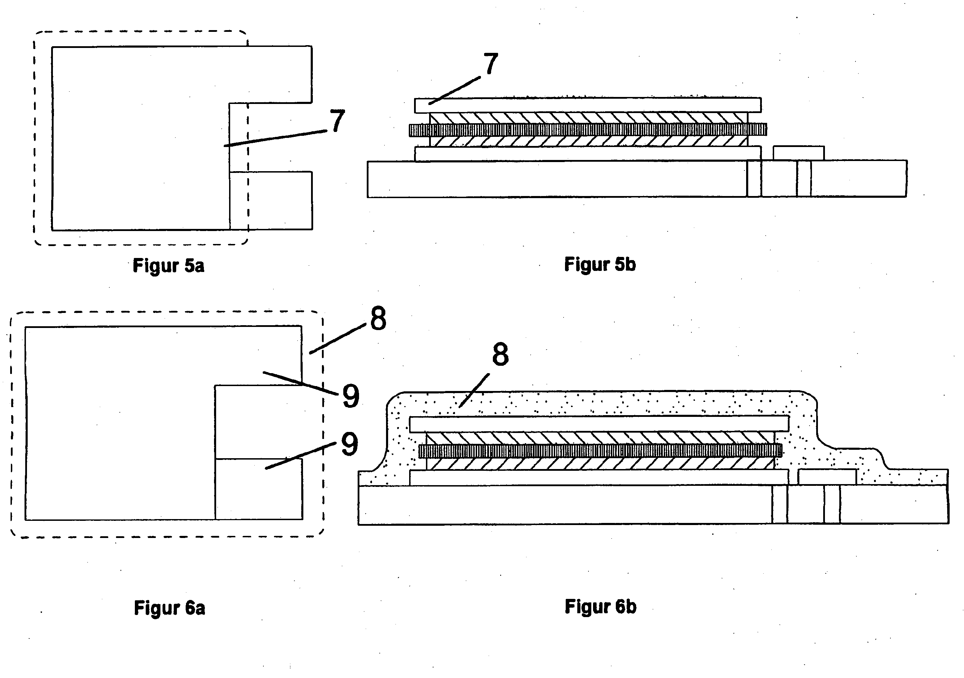

Wie aus Fig. 5 ersichtlich, erfolgt sodann das Aufbringen des oberen Stromableiters 7. Dies kann z.B. durch Auflaminieren von vorstrukturierten, ggf. flexiblen Metallfolien erfolgen, die ggf. auch wieder auf einem Hilfsträger aufgebracht sein können, oder durch Strukturieren einer durchgehenden, selbst tragenden Schicht oder aber auch strukturierte Deponierung (Bedampfung, Siebdruck und andere Verfahren) direkt auf die Gegenelektrode. Bezüglich der letztgenannten Verfahren wird auf die Ausführungen zum Aufbringen der ersten Batteriekontakte (2a, 2b) verwiesen.

Werden die Elektrodenschichten, die Separator-/Elektrolytschicht und die Stromableiterschicht in vorstrukturierter Form aufgebracht, kann dies durch Aufbringen von auf einem Hilfsträger befindlichen, vorstrukturierten Materialien erfolgen, die durch ein Druckverfahren auf den Hilfsträger aufgebracht oder mit Hilfe lithographischer Verfahren und Ätzverfahren oder durch Verfahren wie Laserstrukturierung, Wasserstrahlbearbeitung oder mechanischen Abtrag auf dem Hilfsträger strukturiert wurden. Werden diese Schichten als durchgehende Schichten aufgebracht, die nachträglich strukturiert werden, kann diese Strukturierung mit Hilfe von lithographischen Verfahren, Ätzverfahren und/oder Maskenprozessen erfolgen.

In Fig. 6 ist das Aufbringen einer Verkapselungs- bzw. Passivierungsschicht 8 dargestellt.

Vor dem Aufbringen der Passivierung kann bei Bedarf eine Trocknung des Batteriesubstrats in einem Inertgasofen erfolgen. Die Passivierung hat in der Regel eine ganz entscheidende Bedeutung für die Zuverlässigkeit und Haltbarkeit der Batterie. So darf im Fall von Li-Ionenbatterien keine Feuchtigkeit, kein Sauerstoff, Stickstoff oder CO₂ mit den Elektroden oder dem Elektrolyten in Berührung kommen. Es muß also eine Beschichtung erfolgen, die eine äußerst geringe Permeationsrate für diese Spezies aufweist. Anforderungen an die Dichtheit können in besonderen Fällen mit einer einzigen Schicht realisiert werden; in der Regel empfiehlt sich jedoch ein Mehrschichtaufbau, insbesondere ein solcher aus zwei Schichten. Im letzteren Fall muss nur die erste Schicht elektrisch isolierend sein, während im weiteren Schichtstapel auch Metalle eingesetzt werden können.

Selbstverständlich muss jede Schicht der Passivierung mit Verfahrensschritten aufgebracht werden, bei denen die Substrattemperatur so klein bleibt, dass die Batterie nicht geschädigt wird. Empfehlenswert ist es in der Regel, eine Höchsttemperatur von 80-120°C im wesentlichen einzuhalten und höchstens kurzzeitig zu überschreiten. Jedoch sind manche Batteriesysteme speziell für höhere Temperaturen ausgelegt und damit bis ca. 200 °C Verarbeitungstemperatur geeignet.
Aufgrund der Empfindlichkeit der Li-Batterien sollten die in den Fig. 1 bis 5 beschriebenen Prozesse bei der Herstellung solcher Batterien alle unter Innertgasbedingungen oder im Vakuum erfolgen. Für Wafer-Prozesse können die üblichen, unter Vakuum arbeitenden Handlingmaschinen und Ausrüstungen verwendet werden. Soweit die Erfindung auf weniger empfindliche Batterien angewendet werden soll, sind diese Vorgaben natürlich nicht zwingend.

Da während der ersten Zyklen eine Gasung der Batterie auftreten kann, ist es empfehlenswert, die Batterie zunächst mit zusätzlichem flüssigem Elektrolyten zu füllen, falls dies vorgesehen ist, dann unter Innertbedingungen (z.B. im Trockenraum) zu formieren und im Vakuum zu lagern, um alle Gasreste zu beseitigen und erst im Anschluss daran zu verkapseln. Zu diesem Zweck werden alle Batterien auf einem Substrat mit einem Kontaktadapter ankontaktiert. Bei sowohl bei Primär- als auch bei Sekundärbatterien ist auch eine Voralterung der Batterie (Lagerung bei erhöhten Temperaturen) möglich, bevor die Passivierung hergestellt wird. Eine Alternative zu diesem Vorgehen ist im Zusammenhang mit der Beschreibung der Figur 10 erläutert.

Für die oder mindestens für die erste Abdeckschicht muss ein Material verwendet werden, welches gegenüber dem verwendeten Elektrolyten und den verwendeten Elektroden beständig ist. Das Material wird aus einer mehr oder weniger viskosen, flüssigen Phase oder der Gasphase aufgebracht. Möglich ist z.B. das Aufdampfen von Parylen, die Plasmapolymerisation verschiedener anorganisch-organischer Barriereschichten, die Abscheidung von Al₂O₃, SiO₂, SiO_{y}Nₓ, bei relativ geringen Temperaturen (empfehlenswert: bei oder unter 80°C), Aufschleudem, Tauch- und Sprühbeschichtung von Epoxidharzen und deren UV-Härtung, aber auch von anderen Materialien, die elektrisch nichtleitend, temperaturbeständig und strukturierbar sind, letzteres vorzugsweise photostrukturierbar mit Hilfe von UV-Licht oder anderen Strahlungsquellen.

Die erste oder einzige Passivierungs- oder Verkapselungsschicht sollte eine gute Haftung zu Substrat und Batterie besitzen und eine gute mechanische Stabilität und Elastizität aufweisen, um Dehnungen aufnehmen zu können, die sich durch geringfügige Volumenveränderungen der Batterie beim Zyklen oder Lagern ergeben können. Die Dicke der Passivierung liegt vorteilhaft zwischen 1 und ca. 100 µm, besonders bevorzugt zwischen 2 und ca. 30 µm. Da es in vielen Fällen unvermeidlich ist, dass die Schichten Poren aufweisen, wird zur Vermeidung von möglichen Lecks auf der ersten Passivierungs- oder Verkapselungsschicht vorzugsweise mindestens eine zweite Schicht aufgebracht. Hier können auch elektrisch leitfähige Schichten verwendet werden, die wie oben für die Ableiterschichten beschrieben auf der ersten Passivierungsschicht abgeschieden werden können. Vorzugsweise erfolgt eine Bedampfung mit Aluminium; es kann aber auch ein Sputter- oder anderes Verfahren und/oder ein anderes Metall oder eine Mischung/Legierung von Metallen verwendet werden. Gegebenenfalls kann statt dessen eine zweite isolierende Passivierungsschicht aus den oben beschriebenen Materialien aufgebracht werden. Bei Bedarf oder auf Wunsch können sich eine oder mehrere elektrisch leitende und/oder isolierende Schichten anschließen. Sinnvoll ist eine Schichtfolge von zuerst zwei elektrisch isolierenden Schichten, auf die erst eine Metallisierung und dann eine abschließende Polymerschicht aufgebracht werden.

Wenn die Abscheidung der hermetischen Verkapselung im Vakuum erfolgt, wird nach dem Ausschleusen gleichzeitig der für die Funktion der Batterie günstige Anpressdruck durch den Luftdruck erzielt.

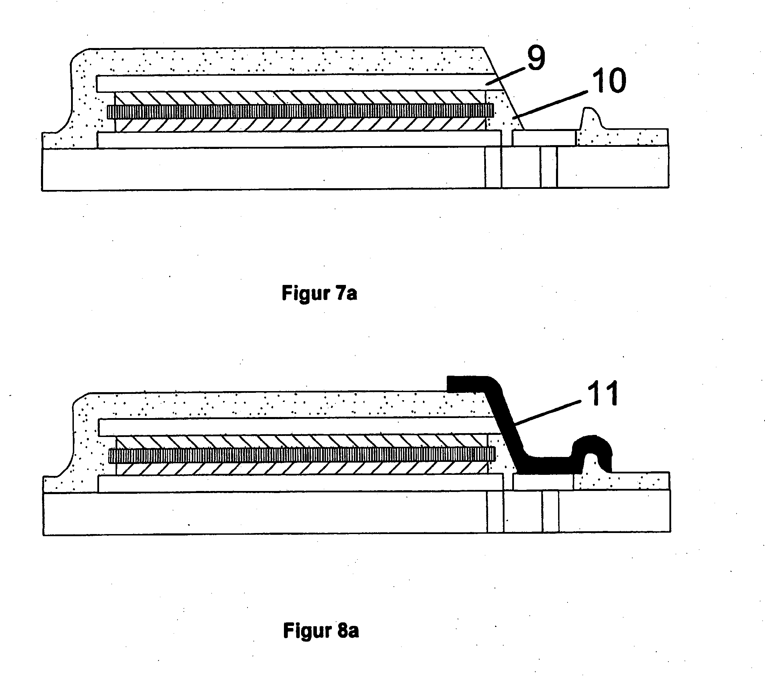

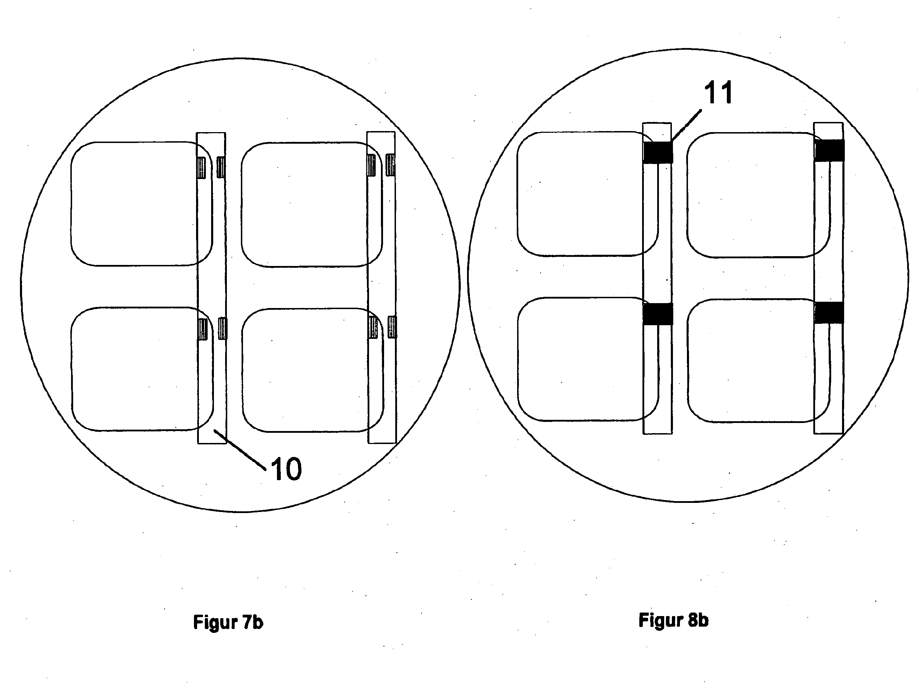

Das Verkapseln geschieht vorzugsweise durch Aufbringen einer durchgehenden Schicht über die seitlichen und oberen Flächen der Batterie hinweg, so dass die Verkapselungsschicht zusammen mit dem Substrat eine vollständige und dichte Umhüllung um die Batterieelemente schafft. In dieser bevorzugten Ausgestaltung müssen nachträglich Wege für die Kontakte geschaffen werden. Wie in Fig. 7 dargestellt, werden hierfür zunächst Öffnungen in der Verkapselungsschicht hergestellt, welche die Stromableiter 9 freilegt. Bei geschicktem räumlichen Aufbau ist nur eine Öffnung vonnöten. Günstig ist es dabei, wenn die Stromableiter 9 über die eigentliche Batterie hinausragen, so dass bei einem z.B. mechanischen Freilegen der Kontakte durch die Öffnung 10, welches mit einem Sägeschnitt oder dgl. erfolgen kann, die aktiven Bereiche der Batterie weiterhin vollständig verkapselt bleiben.

Das Öffnen der Passivierung kann durch beliebige geeignete Verfahren erfolgen. Günstig sind beispielsweise Plasmaprozesse wie reaktives Ionenätzen, Ionenbeschuß, nasschemisches Ätzen oder mechanische Verfahren (Fräsen, Wafersäge, Wasserstrahl) oder eine Bearbeitung mittels Laser. Da es sich um einen geschichteten Aufbau handelt, können auch mehrere Verfahren nacheinander angewendet werden. Auf diese Weise kann z.B. auch das Freilegen einer größeren Fläche des Metalls im Vergleich zu der Isolatorlage in einer eine metallische Schicht enthaltenden Verkapselung erzielt werden, um elektrische Kurzschlüsse beim Herstellen der Kontaktierung zu vermeiden. Wird beispielsweise die Öffnung mit einer Wafersäge oder Fräse herbeigeführt, lassen sich durchgehende Gräben 10 erzeugen, die die Kontakte gleich mehrerer Batterien öffnen, wie in Abb.7b gezeigt ist. Beim Naß-oder Trockenätzen ist ein Lithographieschritt zur Übertragung des Kontaktbildes notwendig. Hier können in einfacher Weise Maskenprozesse eingesetzt werden, da nur jeweils 2 Kontakte pro Batterie benötigt werden und sich somit alle Toleranzen der Justierung und Abmessungen der Einzelbatterien ohne weiteres ausgleichen lassen.

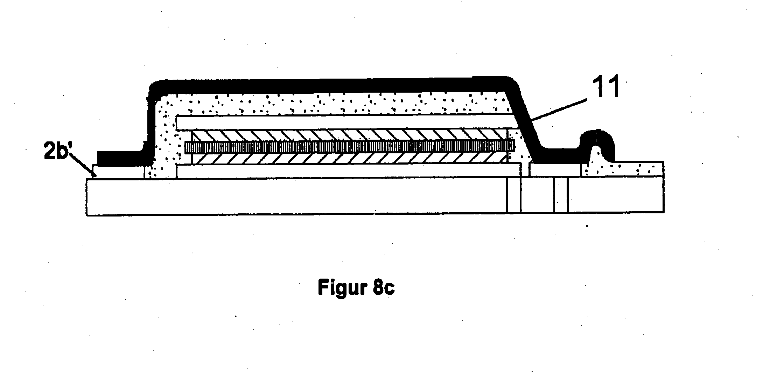

Über die erzielten Öffnungen erfolgt anschließend eine elektrische Ankontaktierung, wie in Fig. 8 gezeigt. Hierfür werden Metalle 11 abgeschieden und strukturiert, die eine Verbindung zwischen den Stromableiterkontakten 9 und den eigentlichen Batteriekontakten 2a, 2b oder 3 herstellen. Dies kann durch Aufdampfen oder Sputtern von Metallen oder Legierungen wie Al, TiW, Cu erfolgen. Die Strukturierung erfolgt in bekannter Weise, z.B. durch Lithographie oder Schwebemasken. Auch möglich ist das Bonden von Drahtbrücken.

Eine bessere Hermetizität der Verkapselung kann erreicht werden, wenn die Batterie möglichst vollständig mit einer Metallschicht eingekapselt ist. Dazu wird, wie in Fig. 3c gezeigt, in der unteren Metallisierungslage auf dem Substrat nicht nur ein Kontakt für die obere Elektrode angelegt, sondern eine rahmenförmige Metallisierung 2b' um die Metallisierung 2a (Fig. 1) herumgelegt. Auf die elektrisch isolierende Passivierungsschicht 8 (Fig. 6) wird dann nicht nur eine kleine Kontaktierungsfahne 11 (Fig.8a) für den oberen Kontakt aufgebracht, sondern eine komplette Metallisierung, die die ganze Batterie abdeckt und sich mit dem unteren Metallisierungsrahmen 2b' am Rand verbindet, wie in Fig. 8c gezeigt ist. Bis auf den kleinen Bereich der Durchführung des unteren Elektrodenkontakts ist damit die Batterie nahezu vollständig in eine Metallschicht eingekapselt, was die Permeationsrate für Gase und Flüssigkeiten der Umgebung wesentlich reduziert.

In Fig. 9 ist eine alternative Herstellung des Gesamtsystems dargestellt, wobei die elektrochemisch aktiven Elemente (Anode, Elektrolyt, Kathode), gegebenenfalls bereits zusammen mit Stromableitern (in Fig. 9 als weiße Balken ohne Bezifferung dargestellt), in einem vorlaminierten Folienstapel eingesetzt werden. Dieser ist in Fig. 9a mit 14 bezeichnet. Der Stapel wird in Batterien geeigneter Größe vereinzelt, vorzugsweise in chipgroße Einzelbatterien, und diese werden auf das Trägersubstrat aufgebracht. Dies kann durch ein gängiges Verfahren erfolgen, beispielsweise durch Laminieren oder durch Kleben. Statt dessen kann der Folienstapel ganzflächig auf das Trägersubstrat oder den Wafer aufgebracht und anschließend in Batterien geeigneter Größen, z.B. in Chipgröße, vereinzelt werden. Wiederum können gängige Verfahren eingesetzt werden, beispielsweise Fräsen, Wafersägen, Wasserstrahl-Bearbeitung, Laserbearbeitung oder dgl., Dabei ist es empfehlenswert, dass möglichst an mindestens einer Batterieseite schräge Kanten 15 hergestellt werden. Anschließend wird der gesamte Batteriestapel durch Schichtdeponierung wie oben im Zusammenhang mit den Erläuterungen zu Fig. 7 beschrieben verkapselt. Für die Verfahren zum Aufbringen der Verkapselungsschicht(en) sowie die dafür einsetzbaren Materialien gilt das voranstehend Gesagte. Es können bei Bedarf dabei auch unterschiedliche Materialien an den Flanken 16 und auf der Oberseite 17 verwendet werden. So kann die Randisolation 16 z.B. auch durch Dispensieren erfolgen. Bei diesem Verfahren handelt es sich um das Aufbringen einer wulstartigen Polymerschicht aus einer Kanüle, die entlang aller Batterieränder bewegt wird. Das Material wird dabei so aufgebracht, dass eine vollständige Benetzung des Batterierands mit Polymer vom Substrat bis zur Oberkante der Batterie erfolgt. Anschließend werden in diese seitlichen Verkapselungsschichten wie oben erläutert Öffnungen strukturiert, die das Ankontaktieren der Stromableiterfolie ermöglichen. Dabei liegen jeweils alle Öffnungen übereinander, die zum positiven Batteriekontakt (18) oder negativen Batteriekontakt (19) gehören. Anschließend werden die elektrischen Verbindungen zwischen den einzelnen Stromableiterfolien und den Batteriekontakten 2a, 2b, 3 durch Aufbringen von strukturierten Metallschichten 11 hergestellt, ebenfalls wie oben beschrieben.

Erfolgt die Strukturierung der Kontaktöffnungen über eine Maskenlithographie, sollten in Richtung der übereinanderliegenden Stromableiterfolien sehr genaue Toleranzen eingehalten werden. Günstig ist deshalb eine Strukturierung der Chipbatterien auf dem gemeinsamen Substrat mit hoher Genauigkeit. Beim Montieren vorher vereinzelter Batterien auf dem Substrat müssen nämlich sehr hohe Justiergenauigkeiten eingehalten werden. Da alle Batterien an der gleichen Seite ankontaktiert werden können, muss diese Toleranz nur in einer Richtung eingehalten werden. Ein Beispiel: Bei einer Dicke der Stromableiterfolie zwischen 10 und 20 µm und einem Böschungswinkel der Batterie von 60° sollte die Justiergenauigkeit besser ± 3 µm sein.

In Fig. 10 ist eine Variante der vorliegenden Erfindung dargestellt, bei der Elektrolytflüssigkeit erst in die Batterie eingefüllt werden soll, wenn die Batterie bereits verkapselt ist. Wie aus Fig. 10a ersichtlich, kann in diesem Fall gleichzeitig mit dem Öffnen der Kontakte (Fig. 7, 10) oder auf Wunsch auch davor oder danach eine Öffnung 12 bis zur Elektrolyt/Separatorfolie hergestellt werden. Das Verschließen der Elektrolytöffnung erfolgt nach dem Einfüllen mit einer zusätzlichen Abscheidung 13 eines Polymers oder Metalls, oder gleichzeitig mit der Abscheidung der Kontaktmetalle 11 (Fig. 8), siehe Fig. 10b. Weil die Batterie in dieser Ausgestaltung der Erfindung zum Zeitpunkt der Verkapselung frei von Elektrolytlösung und damit von leichtflüchtigen Lösemitteln ist, können für alle vorhergehenden Schritte höhere Prozesstemperaturen angewendet werden. Solche Temperaturen sind natürlich auch immer dann möglich, wenn die Batterie völlig Iösungsmittelfrei arbeitet, also eine reine Festkörperbatterie ist.

Alternativ kann zum Befüllen der Batterie mit Flüssigelektrolyt z.B. ein Loch 30 im Substrat 1 vorgesehen sein, welches sich durch die untere Metallisierung 2a (siehe Fig. 1) fortsetzt. Diese Alternative ist in den Fig. 13a und 13b gezeigt. Nachdem die Batterie vollständig aufgebaut und verkapselt ist, wird der Elektrolyt von der Rückseite eingefüllt. Der Elektrolyt bereitet sich durch die Elektrodenschicht 4 (Fig.2) aus und tränkt den Separator 5 (Fig. 3) und die obere Elektrodenschicht 6 (Fig.4). Anschließend wird das Loch hermetisch verschlossen (Fig. 13b). Dies erfolgt vorzugsweise durch Löten, indem z.B. eine Lotkugel 31 oder eine lotbeschichtete Polymerkugel 31 in der metallisierten Öffnung eingebracht wird und durch einen Wärmeimpuls verlötet wird. Dies kann u.a. durch Laserlöten realisiert werden. Durch den kurzzeitigen Wärmeeintrag erfolgt keine Aufheizung der Batterie. Durch genaue Dosierung der Lotmenge gelangt auch kein Lot bis zur Batterie oder zum Elektrolyt. Alternativ ist eine Abdichtung durch Mikroschweißen, Mikronieten oder auch Kleben möglich. Es können natürlich auch zwei Löcher verwendet werden, wobei die Befüllung über ein Loch erfolgt, während die Luft über das andere Loch entweichen kann.

Fig. 11 zeigt einen alternativen Aufbau. In dieser Ausgestaltung besitzt die obere Stromableiterfolie die Gestalt eines durchgehende Metallblechs, welches gleichzeitig als obere Verkapselung genutzt wird. Es muss somit lediglich am Rand eine elektrisch isolierende Verkapselung 21 aufgebracht werden. Dies kann durch Dispensieren oder alle anderen genannten Verfahren (Abb. 6, Abb.9) erfolgen.

In Fig. 12 ist ein gestapelter Aufbau, bestehend aus einer Batterie 14, die zwischen zwei Substraten 1 angeordnet ist, dargestellt. Die Batterie hat in dieser Figur mehrere Schichtungen; selbstverständlich ist auch eine Batterie aus nur einer Elektrolytfolie mit zwei Elektroden möglich. Die Substrate können beispielsweise Si-Chips in Form aktiver Halbleiterschaltungen, partiell elektrisch leitfähige Substrate oder Substrate mit Solarzellen sein. Die Substrate dienen der Verkapselung und werden durch eine Verkapselung des Randbereichs zwischen den Substraten geschlossen, wie sie voranstehend für oben unabgedeckte Batterien beschrieben wurde. Es wird deshalb auf die voranstehenden Ausführungen zum Verkapseln mit einer Verkapselungsschicht 24, den dafür eingesetzten Methoden und Materialien und zum Öffnen und Wiederverschließen der Verkapselungsschicht(en) verwiesen. Die mit Metall gefüllten Öffnungen 18, 19 dienen der Ankontaktierung der einzelnen Stromableiterfolien. Solche Batterien können beispielsweise zur Energieversorgung von Halbleiter-Schaltkreisen dienen. Die Kombination aus Solarzelle, Batterie und Halbleiterchip ergibt ein autonomes Mikrosystem. Die elektrische Verbindung zwischen den äußeren Chips und der Batterie kann durch eine senkrecht zum Stapelaufbau verlaufende, äußere Kontaktierungsstruktur 23 erfolgen.

## Patentansprüche

1. Batterie mit einem elektrisch nicht leitenden Substrat (1), auf dem sie angeordnet ist, umfassend weiterhin mindestens eine Kathode (4), eine Anode (6), und eine Separator-/ Elektrolytschicht (5), die sich in Form von aus elektrochemisch aktivem bzw. aktivierbarem Material und ggf. einer Polymermatrix und/oder weiteren Hilfsstoffen vorgeformten Schichten oder Folien in entsprechender Reihenfolge auf dem Substrat (1) befinden, wobei die Schichtdicke jeder Elektrodenschicht ≥ 10 µm ist, mindestens einen Stromableiter (7) und mindestens einen Batteriekontakt (2a), die jeweils in elektrischem Kontakt mit einer Elektrode stehen, **dadurch gekennzeichnet, dass** die Batterie mindestens eine erste Abdeckschicht (8, 16, 17, 21) aus einem ersten, gegenüber dem verwendeten Elektrolyt- und Elektrodenmaterial beständigen, elektrisch isolierenden Material, das aus der Gasphase oder in Form einer Flüssigkeit oder viskosen Paste aufgebracht wurde, aufweist, die zusammen mit dem Substrat und ggf. (einer) weiteren Komponente(n) eine Verkapselung bildet, durch die die Batterie
gegenüber der Außenwelt abgedichtet ist und wobei das aufgebrachte isolierende Material mindestens eine mit einem elektrisch leitenden Material verschlossene Ausnehmung (11, 18, 19) besitzt, die mit mindestens einem Stromableiter (7) der Batterie in Verbindung steht.

2. Batterie nach Anspruch 1, die auf der ersten Abdeckschicht eine zweite Abdeckschicht aus entweder einem Material wie für die erste Abdeckschicht definiert oder einem zweiten, elektrisch leitfähigen Material, das ebenfalls aus der Gasphase oder in Form einer Flüssigkeit oder viskosen Paste aufgebracht wurde, umfasst.

3. Batterie nach Anspruch 2, umfassend eine erste, eine zweite und eine vierte Abdeckschicht aus einem ersten, gegenüber dem verwendeten Elektrolyt- und Elektrodenmaterial beständigen, elektrisch isolierenden Material, das aus der Gasphase oder in Form einer Flüssigkeit oder viskosen Paste aufgebracht wurde, und eine dritte Abdeckschicht aus einem zweiten, elektrisch leitfähigen Material, das ebenfalls aus der Gasphase oder in Form einer Flüssigkeit oder viskosen Paste aufgebracht wurde, wobei das erste Material der ersten, zweiten und vierten Abdeckschicht gleich oder verschieden sein kann.

4. Batterie nach einem der voranstehenden Ansprüche, **dadurch gekennzeichnet, dass** sie von einem zweiten, elektrisch nicht leitenden Substrat (1) als weitere Komponente abgedeckt ist, derart, dass die offenen Randbereiche zwischen diesen Substraten durch die Abdeckschicht(en) verschlossen ist/sind.

5. Batterie nach einem der Ansprüche 1 bis 3, **dadurch gekennzeichnet, dass** sie von einem Stromableiter in Form eines durchgehenden Metallblechs (22) als weiterer Komponente abgedeckt ist, derart, dass die offenen Randbereiche zwischen dem Substrat (1) und dem Stromableiter (22) durch die Abdeckschicht(en) verschlossen ist/sind.

6. Batterie nach einem der voranstehenden Ansprüche, **dadurch gekennzeichnet, dass** der auf dem Substrat (1) angeordnete Batteriekontakt (2) die Form einer Metallisierung oder einer auf das Substrat aufgeklebten metallischen Schicht besitzt.

7. Batterie nach Anspruch 6, **dadurch gekennzeichnet, dass** die Metallisierung oder metallische Schicht derart strukturiert ist, dass sie neben dem genannten Batteriekontakt (2a) einen zweiten, vom genannten Batteriekontakt getrennten Batteriekontakt (2b) für die Gegenelektrode bildet, der sich außerhalb der Verkapselung befindet, und dass das Substrat (1) ggf. Durchkontaktierungen (3) besitzt, die von beiden Batteriekontakten (2a, 2b) durch das Substrat hindurch wegführen.

8. Batterie nach Anspruch 7, **dadurch gekennzeichnet, dass** das Material in der einen oder mindestens einen mit einem elektrisch leitenden Material verschlossenen Ausnehmung (18, 19) über eine Schicht aus elektrisch leitendem Material (11) mit dem zweiten Batteriekontakt (2b) in leitendem Kontakt steht.

9. Batterie nach einem der voranstehenden Ansprüche, **dadurch gekennzeichnet, dass** das erste, elektrisch isolierende Material der Abdeckschicht ausgewählt ist unter Parylen, nichtleitenden, anorganisch-organischen Polymermaterialien mit Barriereeigenschaften, Al₂O₃, SiO₂, SiO_{y}Nₓ, und Epoxidharzen.

10. Batterie nach Anspruch 6, **dadurch gekennzeichnet, dass** das elektrisch leitende Material, mit dem die Ausnehmung(en) verschlossen ist/sind, ein Metall oder eine Metalllegierung ist und dass der zweite Batteriekontakt als rahmenförmige Metallisierung (2b') ausgestaltet ist, die um den ersten Batteriekontakt (2a) herumgelegt ist, und das genannte elektrisch leitende Material (11) die gesamte Batterie abdeckt und in durchgehendem Kontakt mit der Metallisierung (2b') steht.

11. Batterie nach einem der voranstehenden Ansprüche, weiterhin umfassend einen Zugangskanal (30) zur Separator-/Elektrolytschicht, der sich durch das Substrat (1) erstreckt und gegen die Außenwelt abgedichtet ist (31) oder abgedichtet werden kann.

12. Batterie nach einem der voranstehenden Ansprüche, **dadurch gekennzeichnet, dass** sie eine mehrfache Abfolge von Elektroden (15) und Separator-/Elektrolytschichten in Form von flexiblen, aus elektrochemisch aktivem bzw. aktivierbarem Material und ggf. einer Polymermatrix und/oder weiteren Hilfsstoffen vorgeformten Folien besitzt, wobei jeweils ein Stromableiter zwischen zwei gleichgerichteten und eine Separator-/ Elektrolytschicht zwischen zwei gegengerichteten Elektroden angeordnet sind und wobei alle Stromableiter, die mit den Elektroden gleicher Polung in Kontakt stehen, mit jeweils einer mit einem elektrisch leitenden Material verschlossenen Ausnehmung (18, 19) in Kontakt stehen, und wobei die Ausnehmungen (18, 19) mit strukturierten Metallisierungen (11) in leitendem Kontakt stehen, derart, dass ein leitender Kontakt zwischen jeweils den elektrisch gleichgerichteten Stromableitern und einem von zwei Batteriekontakten (2a, 2b) und/oder einer von zwei Durchkontaktierung(en) (3) vorhanden ist, die durch das Substrat (1) hindurch wegführen.

13. Mehrzahl von Batterien nach einem der voranstehenden Ansprüche, **dadurch gekennzeichnet, dass** jede der Batterien auf demselben, elektrisch nicht leitenden Substrat (1) angeordnet ist.

14. Mehrzahl von Batterien nach Anspruch 13, **dadurch gekennzeichnet, dass** die Elektroden, Elektrolytschichten und Stromableiter jeder Batterie in derselben Ebene liegen.

15. Verwendung mindestens einer Batterie nach einem der Ansprüche 1 bis 12 oder einer Mehrzahl von Batterien nach Anspruch 13 oder 14 in einem System mit eigener Energieversorgung, das sich auf einem Silizium-Wafer oder -Chip befindet, **dadurch gekennzeichnet, dass** das elektrisch nicht leitende Substrat (1) der Batterie(n) Teil des Silizium-Wafers oder -Chips ist.

16. Verwendung nach Anspruch 15, wobei das System weiterhin mindestens eine Solarzelle umfasst, die vorzugsweise auf der gegenüberliegenden Seite des oder eines der Substrate(s) (1) angeordnet ist.

17. Verfahren zum Herstellen einer Batterie nach einem der Ansprüche 1 bis 12, umfassend die folgenden Schritte:
(i) Bereitstellen eines Substrates (1),
(ii) Aufbringen einer Batteriekontakt-Schicht (2) auf das Substrat (1),
(iii) Aufbringen einer Elektrodenschicht (4),
(iv) Aufbringen einer Separator-/ Elektrolytschicht (5) auf die Elektrodenschicht (4)
(v) Aufbringen einer Gegenelektrodenschicht (6) auf die Separator-/Elektrolytschicht (5)
(vi) Aufbringen einer Stromableiterschicht (7),
wobei die Schritte (ii) bis (vi) nacheinander oder gleichzeitig erfolgen können oder wobei zuerst Schritt (ii) und sodann gleichzeitig die Schritte (iii) bis (vi) erfolgen können, oder wobei zuerst Schritt (ii) erfolgt und sodann die Schritte (iii) bis (vi) gleichzeitig oder nacheinander in geeigneter Reihenfolge mehrfach wiederholt werden,
(vii) Aufbringen einer erste Abdeckschicht (8, 16, 17, 21) aus einem ersten, gegenüber dem verwendeten Elektrolyt- und Elektrodenmaterial beständigen, elektrisch isolierenden Material aus der Gasphase oder in Form einer Flüssigkeit oder viskosen Paste und gegebenenfalls einer zweiten Abdeckschicht aus entweder einem Material wie für die erste Abdeckschicht definiert oder einem zweiten, elektrisch leitfähigen Material, das ebenfalls aus der Gasphase oder in Form einer Flüssigkeit oder viskosen Paste aufgebracht wird, und gegebenenfalls weiteren Abdeckschichten aus dem ersten oder dem zweiten Material, derart, dass diese Abdeckschicht(en) zusammen mit dem Substrat und ggf. (einer) weiteren Komponente(n) eine Verkapselung bildet/bilden, durch die die Batterie gegenüber der Außenwelt abgedichtet ist,
(viii) Abtragen von Material der Abdeckschicht(en) derart, dass mindestens eine durchgehende Ausnehmung (11, 18, 19) entsteht, die mindestens einen Stromableiter (7) der Batterie freilegt, und
(ix) Verschließen der Ausnehmung(en) (11, 18, 19) mit einem elektrisch leitenden Material.

18. Verfahren nach Anspruch 17, **dadurch gekennzeichnet, dass** eine strukturierte Schicht aus elektrisch leitendem Material auf zumindest einer der mit elektrisch leitendem Material verschlossenen Ausnehmung(en) (11, 18, 19) abgeschieden wird, derart, dass dieses Material einen leitenden Kontakt zwischen der (einzigen) Ausnehmung oder denjenigen Ausnehmungen, die mit den dem Batteriekontakt (2a) gegengepolten Stromableitern (7) in Kontakt stehen, und dem getrennten Batteriekontakt (2b) herstellt.

19. Verfahren nach Anspruch 18, worin die Schritte (iii) bis (vi) gleichzeitig oder nacheinander mehrfach ausgeführt werden, derart, dass man dabei jeweils einen Stromableiter zwischen zwei gleichgerichteten und eine Separator-/Elektrolytschicht zwischen zwei gegengerichteten Elektroden angeordnet erhält, wobei das Abtragen von Material der Abdeckschicht(en) gemäß Schritt (viii) derart erfolgt, dass im wesentlichen alle Stromableiter (7) der Batterie freigelegt werden, dass anschließend alle Ausnehmung(en) (18, 19) gemäß Schritt (ix) mit einem elektrisch leitenden Material verschlossen werden und dass ein leitender Kontakt (11) zwischen allen Stromableitern, die mit Elektroden gleicher Polung in Kontakt stehen, und dem zugehörigen Batteriekontakt (2a, 2b) und/oder einer der beiden Durchkontaktierung(en) (3) hergestellt wird.

20. Verfahren nach Anspruch 19, **dadurch gekennzeichnet, dass** das Verschließen der Ausnehmungen (18, 19) und das Herstellen eines leitenden Kontakts (11) in aufeinander folgenden Schritten oder in einem einzigen Schritt durch das Aufbringen einer strukturierten Metallisierung erfolgt.

21. Verfahren nach einem der Ansprüche 17 bis 20, **dadurch gekennzeichnet, dass** die Batteriekontakt-Schicht (2) durch Abscheiden von Metall aus der Gasphase und insbesondere durch Vakuumbeschichten aufgebracht wird.

22. Verfahren nach Anspruch 21, **dadurch gekennzeichnet, dass** die Batteriekontakt-Schicht (2) derart strukturiert aufgebracht oder nach dem Aufbringen strukturiert wird, dass sie neben dem genannten Batteriekontakt (2a) einen zweiten, vom genannten Batteriekontakt getrennten Batteriekontakt (2b) für die Gegenelektrode bildet, der sich außerhalb der Verkapselung befindet, wobei als Substrat (1) ein solches verwendet wird, das Durchkontaktierungen (3) besitzt, die derart angeordnet sind, dass sie von beiden Batteriekontakten (2a, 2b) durch das Substrat hindurch wegführen.

23. Verfahren zum Herstellen einer Mehrzahl von Batterien nach einem der Ansprüche 13 oder 14, umfassend die folgenden Schritte:
(i) Bereitstellen eines Substrates (1),
(ii) Aufbringen einer strukturierten Batteriekontakt-Schicht mit jeweils zwei Kontakten(2a, 2b) pro vorgesehener Batterie auf dem Substrat (1),
(iii) Aufbringen einer strukturierten Elektrodenschicht mit jeweils einer Elektrodenfläche (4) pro vorgesehener Batterie,
(iv) Aufbringen einer strukturierten Separator-/ Elektrolytschicht mit jeweils einer Separator-/ Elektrolytfläche (5) pro vorgesehener Batterie derart, dass diese die Elektrodenflächen (4) der Schicht aus Schritt (iii) im wesentlichen oder genau abdecken oder geringfügig über diese überstehen,
(v) Aufbringen einer strukturierten Gegenelektrodenschicht mit jeweils einer Elektrodenfläche (6) pro vorgesehener Batterie derart, dass diese die Separator-/Elektrolytflächen (5) der Schicht aus Schritt (iv) im wesentlichen oder genau abdecken oder im Vergleich zu diesen geringfügig zurückstehen,
(vi) Aufbringen einer strukturierten Stromableiterschicht mit jeweils einer Stromableiterfläche (7) pro vorgesehener Batterie derart, dass diese die darunterliegende Elektrodenfläche (4, 6) im wesentlichen oder genau abdecken oder geringfügig über diese überstehen,
wobei die Schritte (ii) bis (vi) nacheinander oder gleichzeitig erfolgen können oder wobei zuerst Schritt (ii) und sodann gleichzeitig die Schritte (iii) bis (vi) erfolgen können, oder wobei zuerst Schritt (ii) und sodann die Schritte (iii) bis (vi) gleichzeitig oder nacheinander in geeigneter Reihenfolge mehrfach wiederholt werden,
(vii) Aufbringen einer erste Abdeckschicht (8, 16, 17, 21) aus einem ersten, gegenüber dem verwendeten Elektrolyt- und Elektrodenmaterial beständigen, elektrisch isolierenden Material aus der Gasphase oder in Form einer Flüssigkeit oder viskosen Paste und gegebenenfalls einer zweiten Abdeckschicht aus entweder einem Material wie für die erste Abdeckschicht definiert oder einem zweiten, elektrisch leitfähigen Material, das ebenfalls aus der Gasphase oder in Form einer Flüssigkeit oder viskosen Paste aufgebracht wird, und gegebenenfalls weiteren Abdeckschichten aus dem ersten oder dem zweiten Material, derart, dass diese Abdeckschicht(en) zusammen mit dem Substrat und ggf. (einer) weiteren Komponente(n) eine separate Verkapselung für jede Batterie bildet/bilden, durch die die Batterien gegenüber der Außenwelt abgedichtet sind,
(viii) Abtragen von Material der Abdeckschicht(en) derart, dass mindestens eine durchgehende Ausnehmung (11, 18, 19) pro Batterie entsteht, die mindestens einen Stromableiter (7) dieser Batterie freilegt, und
(ix) Verschließen der Ausnehmung(en) (11, 18, 19) mit einem elektrisch leitenden Material.

24. Verfahren nach einem der Ansprüche 17 bis 23, **dadurch gekennzeichnet, dass** ein Teil der oder alle Schritte (iii) bis (vi) durch das Aufbringen von auf einem Hilfsträger befindlichen, vorstrukturierten Materialien erfolgt.

25. Verfahren nach einem der Ansprüche 23 oder 24, **dadurch gekennzeichnet, dass** das Abtragen mechanisch durch Erzeugen von durchgehenden Gräben (19) erfolgt, wobei jeder Graben gleichzeitig mehrere Stromableiter (7) freilegt.

26. Verfahren nach einem der Ansprüche 17 bis 23, **dadurch gekennzeichnet, dass** ein Teil der oder alle Schritte (iii) bis (vi) durch das Aufbringen von durchgehenden Schichten erfolgt, die nach dem Aufbringen strukturiert werden.

27. Verfahren nach einem der Ansprüche 17 bis 26, **dadurch gekennzeichnet, dass** neben dem Abtragen von Material der Abdeckschicht(en) gemäß Schritt (vii) zur Freilegung mindestens eines Stromableiters weiteres Material von dieser/diesen Schicht(en) abgetragen wird, derart, dass eine Freilegung der Separator-/Elektrolytschicht erfolgt, wobei die freigelegte Separator-/ Elektrolytschicht mit Elektrolytlösung befüllt und die durch die Abtragung entstandene(n) Ausnehmung(en) anschließend wieder verschlossen wird/werden.

28. Verfahren nach einem der Ansprüche 17 bis 27, **dadurch gekennzeichnet, dass** das Abtragen von Material der Abdeckschicht(en) gemäß Schritt (vii) durch plasmagestützte Verfahren, insbesondere reaktives Ionenätzen oder Ionenbeschuß, durch nasschemisches Ätzen, durch Laserbearbeitung oder durch ein mechanisches Verfahren wie Sägen, Fräsen oder Wasserstrahlbearbeitung erfolgt, wobei die Ätzverfahren ein Lithographieschritt zur Übertragung des Kontaktbildes umfassen.

29. Verfahren zum Herstellen einer Batterie nach einem der Ansprüche 1 bis 12,
**dadurch gekennzeichnet, dass** mit Hilfe des Verfahrens gemäß einem der Ansprüche 26 bis 40 eine Mehrzahl von Batterien hergestellt wird und diese anschließend durch Trennen des Substrates zwischen den Batterien vereinzelt werden.

30. Batterie nach Anspruch 7, **dadurch gekennzeichnet, dass** das Material in der einen oder mindestens einen mit einem elektrisch leitenden Material verschlossenen Ausnehmung (18, 19) Bestandteil der genannten, mit dem zweiten Batteriekontakt (2b) in leitendem Kontakt stehenden Schicht aus elektrisch leitendem Material (11) ist.

## Claims

1. Battery with an electrically non-conductive substrate (1), on which it is arranged, also comprising at least one cathode (4), an anode (6), and a separator/electrolyte layer (5), which are located on the substrate (1) in the form of layers or films preformed from electrochemically active or activatable material and optionally a polymer matrix and/or further auxiliary materials in appropriate sequence, wherein the layer thickness of each electrode layer is ≥ 10 µm, at least one current diverter (7) and at least one battery contact (2a), which in each case are in electrical contact with an electrode, **characterised in that** the battery has at least one first cover layer (8, 16, 17, 21) made from a first electrically insulating material which is resistant to the electrolyte material and electrode material used and which has been applied from the gas phase or in the form of a liquid or viscous paste, which together with the substrate and optionally (one) further component(s) forms an encapsulation, by means of which the battery is sealed from the outside world and wherein the applied insulating material has at least one recess (11, 18, 19) which is closed with an electrically conductive material and which is connected to at least one current diverter (7) of the battery.

2. Battery according to claim 1, which on the first cover layer comprises a second cover layer made from either a material as defined for the first cover layer or a second, electrically conductive material which has been applied likewise from the gas phase or in the form of a liquid or viscous paste.

3. Battery according to claim 2, comprising a first, a second and a fourth cover layer made from a first electrically insulating material which is resistant to the electrolyte material and electrode material used and which has been applied from the gas phase or in the from of a liquid or viscous paste, and a third cover layer made from a second, electrically conductive material, which has been applied likewise from the gas phase or in the form of a liquid or viscous paste, wherein the first material of the first, second and fourth cover layer may be the same or different.

4. Battery according to one of the preceding claims, **characterised in that** it is covered by a second, electrically non-conductive substrate (1) as a further component, such that the open edge regions between these substrates is/are closed by the cover layer(s).

5. Battery according to one of claims 1 to 3, **characterised in that** it is covered by a current diverter in the form of a continuous metal sheet (22) as a further component such that the open edge regions between the substrate (1) and the current diverter (22) is/are closed by the cover layer(s).

6. Battery according to one of the preceding claims, **characterised in that** the battery contact (2) arranged on the substrate (1) has the form of a metallisation or a metallic layer adhered to the substrate.

7. Battery according to claim 6, **characterised in that** the metallisation or metallic layer is structured such that in addition to the said battery contact (2a), it forms a second battery contact (2b) which is separated from the said battery contact for the counter-electrode which is located outside of the encapsulation, and **in that** the substrate (1) optionally has feedthroughs (3) which lead away from both battery contacts (2a, 2b) through the substrate.

8. Battery according to claim 7, **characterised in that** the material in the one or at least one recess (18, 19) closed with an electrically conductive material is in conductive contact with the second battery contact (2b) via a layer made from electrically conductive material (11).

9. Battery according to one of the preceding claims, **characterised in that** the first, electrically insulating material of the cover layer is selected from parylene, non-conductive, inorganic-organic polymer materials with barrier properties, Al₂O₃, SiO₂, SiO_{y}Nₓ, and epoxy resins.

10. Battery according to claim 6, **characterised in that** the electrically conductive material, with which the recess(es) is/are closed, is a metal or a metal alloy, and **in that** the second battery contact is formed as a frame-like metallisation (2b') which is placed around the first battery contact (2a), and the said electrically conductive material (11) covers the entire battery and is in continuous contact with the metallisation (2b').

11. Battery according to one of the preceding claims, further comprising an access channel (30) to the separator/electrolyte layer, which extends through the substrate (1) and is sealed (31) or may be sealed from the outside world.

12. Battery according to one of the preceding claims, **characterised in that** it has a multiple sequence of electrodes (15) and separator/electrolyte layers in the form of flexible films preformed from electrochemically active or activatable material and optionally a polymer matrix and/or further auxiliary materials, wherein in each case a current diverter is arranged between two rectified electrodes and a separator/electrolyte layer is arranged between two counter-directed electrodes and wherein all current diverters, which are in contact with the electrodes of the same polarity, are in contact with in each case a recess (18, 19) which is closed with an electrically conductive material, and wherein the recesses (18, 19) are in conductive contact with structured metallisations (11) such that a conductive contact is present between in each case the electrically rectified current diverters and one of two battery contacts (2a, 2b) and/or one of two feedthrough(s) (3) which lead away through the substrate (1).

13. Plurality of batteries according to one of the preceding claims, **characterised in that** each of the batteries is arranged on the same, electrically non-conductive substrate (1).

14. Plurality of batteries according to claim 13, **characterised in that** the electrodes, electrolyte layers and current diverters of each battery lie in the same plane.

15. Use of at least one battery according to one of claims 1 to 12 or a plurality of batteries according to claim 13 or 14 in a system with its own energy supply, which is located on a silicon wafer or silicon chip, **characterised in that** the electrically non-conductive substrate (1) of the battery(ies) is part of the silicon wafer or silicon chip.

16. Use according to claim 15, wherein the system further comprises at least one solar cell which is preferably arranged on the opposite side of the or one of the substrate(s) (1).

17. Process for producing a battery according to one of claims 1 to 12, comprising the following steps:
(i) provision of a substrate (1),
(ii) application of a battery contact layer (2) onto the substrate (1),
(iii) application of an electrode layer (4),
(iv) application of a separator/electrolyte layer (5) onto the electrode layer (4)
(v) application of a counter-electrode layer (6) onto the separator/electrolyte layer (5)
(vi) application of a current diverter layer (7),
wherein the steps (ii) to (vi) may take place one after another or at the same time or wherein initially step (ii) and then at the same time steps (iii) to (vi) may take place, or wherein initially step (ii) takes place and then steps (iii) to (vi) at the same time or one after another are repeated several times in suitable sequence,
(vii) application of a first cover layer (8, 16, 17, 21) made from a first electrically insulating material which is resistant to the electrolyte material and electrode material used, from the gas phase or in the form of a liquid or viscous paste and optionally a second cover layer made from either a material as defined for the first cover layer or a second, electrically conductive material, which is applied likewise from the gas phase or in the form of a liquid or viscous paste, and optionally further cover layers made from the first or the second material such that these cover layer(s) together with the substrate and optionally (one) further component(s) forms/form an encapsulation, by means of which the battery is sealed from the outside world,
(viii) removal of material of the cover layer(s) such that at least one continuous recess (11, 18, 19) is produced which exposes at least one current diverter (7) of the battery, and
(ix) closing of the recess(es) (11, 18, 19) with an electrically conductive material.

18. Process according to claim 17, **characterised in that** a structured layer of electrically conductive material is deposited on at least one of the recess(es) (11, 18, 19) closed with electrically conductive material such that this material produces a conductive contact between the (single) recess or those recesses which are in contact with the current diverters (7) with counter-polarity to the battery contact (2a), and the separated battery contact (2b).

19. Process according to claim 18, wherein steps (iii) to (vi) are executed at the same time or one after another several times such that thus in each case a current diverter is obtained arranged between two rectified electrodes and a separator/electrolyte layer is obtained arranged between two counter-directed electrodes, wherein the removal of material of the cover layer(s) according to step (viii) takes place such that essentially all current diverters (7) of the battery are exposed, that subsequently all recess(es) (18, 19) according to step (ix) are closed with an electrically conductive material and that a conductive contact (11) is produced between all current diverters which are in contact with electrodes of the same polarity, and the associated battery contact (2a, 2b) and/or one of the two feedthrough(s) (3).

20. Process according to claim 19, **characterised in that** the closing of the recesses (18, 19) and the production of a conductive contact (11) takes place in sequential steps or in a single step by the application of a structured metallisation.

21. Process according to one of claims 17 to 20, **characterised in that** the battery contact layer (2) is applied by deposition of metal from the gas phase and in particular by vacuum coating.

22. Process according to claim 21, **characterised in that** the battery contact layer (2) is applied structured or is structured after application such that in addition to the said battery contact (2a), it forms a second battery contact (2b) which is separated from the said battery contact for the counter-electrode which is located outside of the encapsulation, wherein as the substrate (1) such a substrate is used which has feedthroughs (3) which are arranged such that they lead away from both battery contacts (2a, 2b) through the substrate.

23. Process for producing a plurality of batteries according to one of claims 13 or 14, comprising the following steps:
(i) provision of a substrate (1),
(ii) application of a structured battery contact layer with in each case two contacts (2a, 2b) per battery provided on the substrate (1),
(iii) application of a structured electrode layer with in each case one electrode surface (4) per battery provided,
(iv) application of a structured separator/electrolyte layer with in each case one separator/electrolyte surface (5) per battery provided such that they essentially or exactly cover the electrode surfaces (4) of the layer from step (iii) or project slightly beyond them,
(v) application of a structured counter-electrode layer with in each case one electrode surface (6) per battery provided such that they essentially or exactly cover the separator/electrolyte surfaces (5) of the layer from step (iv) or are set back slightly compared to them,
(vi) application of a structured current diverter layer with in each case one current diverter surface (7) per battery provided such that they essentially or exactly cover the underlying electrode surface (4, 6) or project slightly beyond it,
wherein steps (ii) to (vi) may take place one after another or at the same time or wherein initially step (ii) and then at the same time steps (iii) to (vi) may take place, or wherein initially step (ii) and then steps (iii) to (vi) at the same time or one after another are repeated several times in suitable sequence,
(vii) application of a first cover layer (8, 16, 17, 21) made from a first electrically insulating material which is resistant to the electrolyte material and electrode material used, from the gas phase or in the form of a liquid or viscous paste and optionally a second cover layer made from either a material as defined for the first cover layer or a second, electrically conductive material, which is applied likewise from the gas phase or in the form of a liquid or viscous paste, and optionally further cover layers made from the first or the second material such that these cover layer(s) together with the substrate and optionally (one) further component(s) forms/form a separate encapsulation for each battery, by means of which the batteries are sealed from the outside world,
(viii) removal of material of the cover layer(s) such that at least one continuous recess (11, 18, 19) per battery is produced which exposes at least one current diverter (7) of this battery, and
(ix) closing of the recess(es) (11, 18, 19) with an electrically conductive material.

24. Process according to one of claims 17 to 23, **characterised in that** some or all steps (iii) to (vi) are effected by the application of prestructured materials located on an auxiliary support.

25. Process according to one of claims 23 or 24, **characterised in that** the removal takes place mechanically by producing continuous trenches (19), wherein each trench exposes several current diverters (7) at the same time.

26. Process according to one of claims 17 to 23, **characterised in that** some or all steps (iii) to (vi) take place by the application of continuous layers which are structured after application.

27. Process according to one of claims 17 to 26, **characterised in that** in addition to the removal of material of the cover layer(s) according to step (vii) to expose at least one current diverter, further material is removed from these layer(s) such that exposure of the separator/electrolyte layer takes place, wherein the exposed separator/electrolyte layer is filled with electrolyte solution and the recess(es) being produced by the removal is/are then closed again.

28. Process according to one of claims 17 to 27, **characterised in that** the removal of material of the cover layer(s) according to step (vii) takes place by plasma-enhanced processes, in particular reactive ion-etching or ion bombardment, by wet-chemical etching, by laser processing or by a mechanical process, such as sawing, milling or water-jet processing, wherein the etching processes comprise a lithography step for transferring the contact image.

29. Process for producing a battery according to one of claims 1 to 12, **characterised in that** with the aid of the process according to one of claims 26 to 40, a plurality of batteries is produced and they are then isolated by separating the substrate between the batteries.

30. Battery according to claim 7, **characterised in that** the material in the one or at least one recess (18, 19) closed with an electrically conductive material is a constituent of the said layer of electrically conductive material (11) in conductive contact with the second battery contact (2b).

## Revendications

1. Batterie pourvue d'un substrat non électroconducteur (1) sur lequel elle est installée, qui comporte en outre au moins une cathode (4), une anode (6) et une couche électrolytique / de séparation (5) se trouvant sous forme de couches ou de feuilles préformées à partir de matière électrochimiquement active ou activable et éventuellement d'une matrice polymère et / ou d'autres matières secondaires, dans une suite correspondante sur le substrat (1), l'épaisseur de chaque couche d'électrode étant ≥ 10 µm, au moins un déviateur de courant (7) et au moins un contact de batterie (2a), chacun des contacts se trouvant en contact électrique avec une électrode, **caractérisée en ce qu'**elle comporte au moins une première couche de recouvrement (8, 16, 17, 21) constituée d'une première matière électriquement isolante et stable par rapport à la matière utilisée pour l'électrolyte et les électrodes, déposée à partir de la phase gazeuse ou sous forme d'un liquide ou d'une pâte visqueuse, qui forme avec le substrat et éventuellement un ou plusieurs autres composants un élément d'encapsulation grâce auquel la batterie est rendue étanche par rapport au milieu extérieur et qui possède au moins un évidement (11, 18, 19) fermé par une matière électroconductrice se trouvant en connexion avec au moins un déviateur de courant (7) de la batterie.

2. Batterie selon la revendication 1, qui comprend sur la première couche de recouvrement une deuxième couche de recouvrement constituée de la même matière que celle définie pour la première couche de recouvrement ou d'une deuxième matière électroconductrice, qui a également été déposée à partir de la phase gazeuse ou sous forme d'un liquide ou d'une pâte visqueuse.

3. Batterie selon la revendication 2, comprenant une première, une deuxième et une quatrième couches de recouvrement constituées d'une première matière électriquement isolante, stable par rapport à la matière utilisée pour l'électrolyte et les électrodes, qui a été déposée à partir de la phase gazeuse ou sous forme d'un liquide ou d'une pâte visqueuse, et une troisième couche de recouvrement constituée d'une deuxième matière électroconductrice, qui a également été déposée à partir de la phase gazeuse ou sous forme d'un liquide ou d'une pâte visqueuse, dans laquelle la première matière des première, deuxième et quatrième couches de recouvrement peut être identique ou différente.

4. Batterie selon l'une quelconque des revendications précédentes, **caractérisée en ce qu'**elle est recouverte par un deuxième substrat (1) non électroconducteur constituant un autre composant, de telle manière que les zones de bord ouvertes entre ces substrats soient fermées par la/les couche(s) de recouvrement.

5. Batterie selon l'une quelconque des revendications 1 à 3, **caractérisée en ce qu'**elle est recouverte par un déviateur de courant sous forme d'une tôle métallique continue (22) constituant un autre composant, de telle manière que les zones de bord ouvertes entre le substrat (1) et le déviateur de courant (22) soient fermées par la/les couche(s) de recouvrement.

6. Batterie selon l'une quelconque des revendications précédentes, **caractérisée en ce que** le contact de batterie (2) disposé sur le substrat (1) possède la forme d'une métallisation ou d'une couche métallique collée sur le substrat.

7. Batterie selon la revendication 6, **caractérisée en ce que** la métallisation ou la couche métallique est structurée de telle manière que, en plus du contact de batterie précité (2a), elle forme un deuxième contact de batterie (2b) séparé du contact de batterie précité pour la contre-électrode, lequel se trouve à l'extérieur de l'élément d'encapsulation, et **en ce que** le substrat (1) possède éventuellement des contacts traversants (3), qui conduisent à travers le substrat à partir des deux contacts de batterie (2a, 2b).

8. Batterie selon la revendication 7, **caractérisée en ce que** la matière dans le ou dans au moins un évidement (18, 19) fermé par une matière électroconductrice est en contact conducteur avec le deuxième contact de batterie (2b) au moyen d'une couche en matière électroconductrice (11).

9. Batterie selon l'une quelconque des revendications précédentes, **caractérisée en ce que** la première matière électriquement isolante de la couche de recouvrement est sélectionnée parmi le parylène, les matières polymères organiques ou inorganiques non conductrices avec des propriétés de barrière, Al₂O₃, SiO₂, SiO_{y}Nₓ, et les résines époxydes.

10. Batterie selon la revendication 6, **caractérisée en ce que** la matière électroconductrice avec laquelle le/les évidement(s) est/sont fermé(s), est un métal ou un alliage métallique, et **en ce que** le deuxième contact de batterie est réalisé sous forme de cadre métallisé (2b'), qui est déposé autour du premier contact de batterie (2a), et la matière électroconductrice précitée (11) recouvre toute la batterie et est en contact continu avec la métallisation (2b').

11. Batterie selon l'une quelconque des revendications précédentes, comprenant en outre un canal d'accès (30) vers la couche électrolytique / de séparation, qui s'étend à travers le substrat (1) et est ou peut être rendu étanche par rapport au milieu extérieur (31).

12. Batterie selon l'une quelconque des revendications précédentes, **caractérisée en ce qu'**elle possède une succession multiple d'électrodes (15) et de couches électrolytiques / de séparation sous forme de feuilles flexibles préformées à partir de matière électrochimiquement active ou activable et éventuellement d'une matrice polymère et / ou d'autres matières secondaires, dans laquelle un déviateur de courant est chaque fois disposé entre deux électrodes de même sens et une couche électrolytique / de séparation entre deux électrodes de sens contraire, et dans laquelle tous les déviateurs de courant, qui sont en contact avec les électrodes de même polarité, sont chaque fois en contact avec un évidement (18, 19) fermé avec une matière électroconductrice, et dans laquelle les évidements (18, 19) sont en contact conducteur avec des métallisations structurées (11), de telle manière qu'il existe un contact conducteur entre chaque fois les déviateurs de courant de même sens électrique et un de deux contacts de batterie (2a, 2b) et/ou un de deux contact(s) traversant(s) (3), qui conduisent à travers le substrat (1).

13. Pluralité de batteries selon l'une quelconque des revendications précédentes, **caractérisée en ce que** chacune des batteries est disposée sur le même substrat non électroconducteur (1).

14. Pluralité de batteries selon la revendication 13, **caractérisée en ce que** les électrodes, les couches électrolytiques et les déviateurs de courant de chaque batterie se trouvent dans le même plan.

15. Utilisation d'au moins une batterie selon l'une quelconque des revendications 1 à 12 ou d'une pluralité de batteries selon la revendication 13 ou 14 dans un système avec sa propre source d'énergie, qui se trouve sur une galette ou une puce de silicium, **caractérisée en ce que** le substrat non électroconducteur (1) de la/des batterie(s) est une partie de la galette ou de la puce de silicium.

16. Utilisation selon la revendication 15, dans laquelle le système comprend en outre une cellule solaire, qui est disposée de préférence sur la face opposée du ou d'un des substrat(s) (1).

17. Procédé de fabrication d'une batterie selon l'une quelconque des revendications 1 à 12, comprenant les étapes suivantes:
(i) préparation d'un substrat (1);
(ii) dépôt d'une couche de contact de batterie (2) sur le substrat (1);
(iii) dépôt d'une couche d'électrode (4);
(iv) dépôt d'une couche électrolytique / de séparation (5) sur la couche d'électrode (4);
(v) dépôt d'une couche de contre-électrode (6) sur la couche électrolytique /de séparation (5);
(vi) dépôt d'une couche de déviateur de courant (7);
dans lequel les étapes (ii) à (vi) peuvent être exécutées l'une après l'autre ou en même temps ou dans lequel on peut exécuter d'abord l'étape (ii) et ensuite en même temps les étapes (iii) à (vi), ou dans lequel on exécute d'abord l'étape (ii) et on répète ensuite à plusieurs reprises les étapes (iii) à (vi) en même temps ou l'une après l'autre dans un ordre approprié,
(vii) dépôt d'une première couche de recouvrement (8, 16, 17, 21) constituée d'une première matière électriquement isolante et stable par rapport à la matière utilisée pour l'électrolyte et les électrodes, déposée à partir de la phase gazeuse ou sous forme d'un liquide ou d'une pâte visqueuse, et éventuellement d'une deuxième couche de recouvrement constituée soit d'une matière définie comme pour la première couche de recouvrement soit d'une deuxième matière électroconductrice, qui est également déposée à partir de la phase gazeuse ou sous forme d'un liquide ou d'une pâte visqueuse, et éventuellement d'autres couches de recouvrement constituées de la première ou de la deuxième matière, de telle manière que cette/ces couche(s) de recouvrement forme(nt) avec le substrat et éventuellement un ou plusieurs autres composants un élément d'encapsulation, grâce auquel la batterie est rendue étanche par rapport au milieu extérieur;
(viii) enlèvement de matière de la/des couche(s) de recouvrement de telle manière qu'il se crée au moins un évidement traversant (11, 18, 19), qui dégage au moins un déviateur de courant (7) de la batterie; et
(ix) fermeture du/des évidement(s) (11, 18, 19) avec une matière électroconductrice.

18. Procédé selon la revendication 17, **caractérisé en ce que** l'on dépose une couche structurée constituée d'une matière électroconductrice sur au moins un des évidements (11, 18, 19) fermés par une matière électroconductrice, de telle manière que cette matière établisse un contact conducteur entre l'évidement (unique) ou avec les évidements qui sont en contact avec les déviateurs de courant (7) de polarité opposée au contact de batterie (2a), et le contact de batterie séparé (2b).

19. Procédé selon la revendication 18, dans lequel on exécute à plusieurs reprises les étapes (iii) à (vi) en même temps ou l'une après l'autre, de telle manière que l'on obtienne en l'occurrence chaque fois un déviateur de courant disposé entre deux électrodes de même sens et une couche électrolytique / de séparation entre deux électrodes de sens opposé, dans lequel on effectue l'enlèvement de matière du/des évidement(s) selon l'étape (viii) de telle manière que sensiblement tous les déviateurs de courant (7) de la batterie soient dégagés, en ce que l'on ferme ensuite tous les évidements (18, 19) selon l'étape (ix) avec une matière électroconductrice et en ce que l'on établit un contact conducteur (11) entre tous les déviateurs de courant, qui sont en contact avec des électrodes de même polarité, et le contact de batterie correspondant (2a, 2b) et/ou un des deux contacts traversants (3).

20. Procédé selon la revendication 19, **caractérisé en ce que** l'on effectue la fermeture des évidements (18, 19) et l'établissement d'un contact conducteur (11) au cours d'étapes successives ou en une seule étape par le dépôt d'une métallisation structurée.

21. Procédé selon l'une quelconque des revendications 17 à 20, **caractérisé en ce que** l'on dépose la couche de contact de batterie (2) par dépôt de métal à partir de la phase gazeuse et en particulier par un procédé de revêtement sous vide.

22. Procédé selon la revendication 21, **caractérisé en ce que** l'on dépose la couche de contact de batterie (2) de façon structurée ou on la structure après le dépôt de telle manière que, en plus du contact de batterie précité (2a), elle forme un deuxième contact de batterie (2b) séparé du premier contact de batterie précité pour la contre-électrode, lequel se trouve à l'extérieur de l'élément d'encapsulation, dans lequel on utilise comme substrat (1) un substrat qui possède des contacts traversants (3), qui sont disposés de telle manière qu'ils conduisent à travers le substrat à partir des deux contacts de batterie (2a, 2b).

23. Procédé de fabrication d'une pluralité de batteries selon l'une quelconque des revendications 13 ou 14, comprenant les étapes suivantes:
(i) préparation d'un substrat (1);
(ii) dépôt d'une couche de contact de batterie structurée avec chaque fois deux contacts (2a, 2b) par batterie prévue sur le substrat (1) ;
(iii) dépôt d'une couche d'électrode structurée avec chaque fois une face d'électrode (4) par batterie prévue;
(iv) dépôt d'une couche électrolytique / de séparation structurée avec chaque fois une face électrolytique / de séparation (5) par batterie prévue, de telle manière que celles-ci recouvrent sensiblement ou exactement les faces d'électrode (4) de la couche d'électrode de l'étape (iii) ou soient légèrement en saillie au-dessus de celles-ci;
(v) dépôt d'une couche de contre-électrode structurée avec chaque fois une face d'électrode (6) par batterie prévue, de telle manière que celles-ci recouvrent sensiblement ou exactement les faces électrolytiques / de séparation (5) de la couche de l'étape (iv) ou soient légèrement en retrait par rapport à celles-ci:
(vi) dépôt d'une couche de déviateur de courant structurée avec chaque fois une face de déviateur de courant (7) par batterie prévue, de telle manière que celles-ci recouvrent sensiblement ou exactement la face d'électrode sous-jacente (4, 6) ou soient légèrement en saillie au-dessus de celles-ci;
dans lequel les étapes (ii) à (vi) peuvent être exécutées l'une après l'autre ou en même temps ou dans lequel on peut exécuter d'abord l'étape (ii) et ensuite en même temps les étapes (iii) à (vi), ou dans lequel on exécute d'abord l'étape (ii) et on répète ensuite à plusieurs reprises les étapes (iii) à (vi) en même temps ou l'une après l'autre dans un ordre approprié,
(vii) dépôt d'une première couche de recouvrement (8, 16, 17, 21) constituée d'une première matière électriquement isolante et stable par rapport à la matière utilisée pour l'électrolyte et les électrodes, déposée à partir de la phase gazeuse ou sous forme d'un liquide ou d'une pâte visqueuse, et éventuellement d'une deuxième couche de recouvrement constituée soit d'une matière définie comme pour la première couche de recouvrement soit d'une deuxième matière électroconductrice, qui est également déposée à partir de la phase gazeuse ou sous forme d'un liquide ou d'une pâte visqueuse, et éventuellement d'autres couches de recouvrement constituées de la première ou de la deuxième matière, de telle manière que cette/ces couche(s) de recouvrement forme(nt) avec le substrat et éventuellement un ou plusieurs autres composants un élément d'encapsulation, grâce auquel la batterie est rendue étanche par rapport au milieu extérieur;
(viii) enlèvement de matière de la/des couche(s) de recouvrement de telle manière qu'il se crée au moins un évidement traversant (11, 18, 19) par batterie, qui dégage au moins un déviateur de courant (7) de cette batterie; et
(ix) fermeture du/des évidement(s) (11, 18, 19) avec une matière électroconductrice.

24. Procédé selon l'une quelconque des revendications 17 à 23, **caractérisé en ce que** l'on exécute une partie ou la totalité des étapes (iii) à (vi) par le dépôt de matières préstructurées se trouvant sur un support auxiliaire.

25. Procédé selon l'une quelconque des revendications 23 ou 24, **caractérisé en ce que** l'on effectue l'enlèvement mécaniquement par la production de fosses traversantes (19), chaque fosse dégageant en même temps plusieurs déviateurs de courant (7).

26. Procédé selon l'une quelconque des revendications 17 à 23, **caractérisé en ce que** l'on exécute une partie ou la totalité des étapes (iii) à (vi) par le dépôt de couches continues, qui sont structurées après le dépôt.

27. Procédé selon l'une quelconque des revendications 17 à 26, **caractérisé en ce que**, en plus de l'enlèvement de matière de la/des couche(s) de recouvrement selon l'étape (vii) pour le dégagement d'au moins un déviateur de courant, on enlève en plus de la matière de cette/ces couche(s) de telle manière qu'il en résulte un dégagement de la couche électrolytique / de séparation, dans lequel on remplit d'une solution d'électrolyte la couche électrolytique / de séparation dégagée et ensuite on ferme de nouveau le/les évidement(s) créés par l'enlèvement.

28. Procédé selon l'une quelconque des revendications 17 à 27, **caractérisé en ce que** l'on effectue l'enlèvement de matière de la/des couche(s) de recouvrement selon l'étape (vii) par un procédé assisté par plasma, en particulier par gravure ionique réactive ou bombardement ionique, par gravure chimique humide, par traitement au laser ou par un procédé mécanique comme le sciage, le fraisage ou le traitement au jet d'eau, dans lequel les procédés de gravure comprennent une étape de lithographie pour le transfert d'une image de contact.

29. Procédé de fabrication d'une batterie selon l'une quelconque des revendications 1 à 12, **caractérisé en ce que** l'on fabrique une pluralité de batteries à l'aide du procédé selon l'une quelconque des revendications 26 à 28 et on la scinde ensuite en tranchant le substrat entre les batteries.

30. Batterie selon la revendication 7, **caractérisée en ce que** la matière présente dans le ou au moins un évidement (18, 19) fermé par une matière électroconductrice est un constituant de la couche en matière électroconductrice (11) qui se trouve en contact conducteur avec le deuxième contact de batterie (2b).
